# EUROPÄISCHE PATENTSCHRIFT

(11) **EP 3 336 736 B1**
(45) Veröffentlichungstag und Bekanntmachung des Hinweises auf die Patenterteilung: **30.10.2019**
(21) Anmeldenummer: 17207440.3
(22) Anmeldetag: 14.12.2017
(51) Int. Cl.: G06F 21/34, H04L 29/06

(54) **HILFS-ID-TOKEN ZUR MULTI-FAKTOR-AUTHENTIFIZIERUNG**
AUXILIARY ID TOKEN FOR MULTI-FACTOR AUTHENTICATION
JETON AUXILIAIRE ID DESTINÉ À L'AUTHENTIFICATION MULIFACTEUR

(30) Priorität: 16.12.2016 DE 102016225357
(43) Veröffentlichungstag der Anmeldung: 20.06.2018
(73) Patentinhaber: Bundesdruckerei GmbH, 10969 Berlin (DE)
(72) Erfinder: SEEGEBARTH, Christian, 20249 Hamburg (DE); DIETRICH, Frank, 12437 Berlin (DE)
(74) Vertreter: Richardt Patentanwälte PartG mbB

(56) Entgegenhaltungen:
- EP-A1- 2 775 417
- US-A1- 2007 118 891
- US-A1- 2014 090 039

## Beschreibung

Die Erfindung betrifft ein Verfahren für eine zumindest halbautomatisierte Multi-Faktor-Authentifizierung eines Nutzers, einen Hilfs-ID-Token, ein den Hilfs-ID-Token umfassendes System sowie ein Computerprogrammprodukt.

Aus dem Stand der Technik sind Systeme der Zugriffskontrolle mit Zwei-Faktor-Authentifizierung bekannt. Eine solche Zwei-Faktor-Authentifizierung dient der Authentifizierung eines Nutzers mittels der Kombination zweier verschiedener und insbesondere unabhängiger Komponenten, auch Faktoren genannt.

Diese Faktoren können beispielsweise gegeben sein in Form eines Gegenstandes, der sich im Besitz des Nutzers befindet, in Form von Wissen, welches nur der Nutzer hat, oder in Form eines Merkmals, welches untrennbar mit dem Nutzer verbunden ist. Ein solcher Gegenstand kann beispielsweise eine Bankkarte sein, solches Wissen kann beispielsweise ein Benutzername, ein Kennwort, eine Persönliche Identifikationsnummer (PIN) oder eine Transaktionsnummer (TAN) sein und ein solches Merkmal kann beispielsweise ein Fingerabdruck oder das Muster einer Regenbogenhaut des Auges sein. Aus dem Alltag ist dies zum Beispiel von Geldautomaten bekannt, bei welchen erst die Kombination aus Bankkarte und PIN den Nutzer authentisiert. Eine Zwei-Faktor-Authentifizierung ist nur dann erfolgreich, wenn beide benötigten Faktoren zusammen und in der korrekten Form bereitgestellt werden. Fehlt auch nur ein Faktor oder wird er falsch verwendet, so schlägt die Authentifizierung fehl. Ein Zugriff, der durch die Zwei-Faktor-Authentifizierung gesichert ist, wird in diesem Fall verweigert.

Bekannte Verfahren zur Zwei-Faktor-Authentifizierung weisen jedoch die Nachteile auf, dass sie umständlich und zeitaufwendig sind: Die zuvor genannten Bankkarten müssen typischer Weise in einen Einzug eines zum Lesen der Bankkarten konfiguriertes Terminal eingeführt werden, Benutzernamen, Kennwörter, PINs oder TANs müssen typischer Weise über eine Tastatur eingegeben werden und zum Erfassen von Fingerabdrücken oder Irismustern, müssen ein Finger oder ein Auge an einem entsprechenden Sensor angeordnet werden.

Weiterhin sind entsprechende Zwei-Faktor-Authentifizierungen aufgrund der geringen Anzahl von lediglich zwei Faktoren anfällig gegenüber Manipulationsversuchen, insbesondere Diebstahl. Die Sicherheit des Verfahren könnte zwar durch eine Erhöhung der Anzahl an verwendeten Faktoren gesteigert werde, damit würden das Verfahren aber noch aufwendiger und zeitraubender werden. Gerade für Alltagsanwendungen verbietet sich daher in den zuvor genannten Fällen aus Gründen der Verfahrensökonomie eine Verwendung von mehr als zwei Faktoren.

Die US 2007/0118891 A1 beschreibt ein universelles Authentifizierungstoken, welches dazu konfiguriert ist, Sicherheitsberechtigungsnachweise von anderen Authentifizierungstoken und/oder -geräten sicher zu erlangen. Auf diese Weise kann ein einziges universelles Authentifizierungstoken die Authentifizierungsdaten speichern, die für den Zugriff auf eine Vielzahl von Ressourcen, Diensten und Anwendungen für einen Benutzer erforderlich sind. Das universelle Authentifizierungstoken umfasst eine Benutzerschnittstelle, einen Speicher zum Speichern einer Vielzahl von Authentifizierungsdatensätzen für einen Benutzer und einen sicheren Prozessor. Der sichere Prozessor stellt die erforderlichen kryptographischen Operationen zum Verschlüsseln, Entschlüsseln und/oder Authentifizieren von Daten bereit, die von einem universellen Token gesendet oder empfangen werden.

Der Erfindung liegt demgegenüber die Aufgabe zugrunde, ein effizientes und zuverlässiges Verfahren zur Multi-Faktor-Authentifizierung eines Nutzers zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren für eine zumindest halbautomatisierte Multi-Faktor-Authentifizierung eines Nutzers mittels eines dem Nutzer zugordneten tragbaren Hilfs-ID-Tokens. Der Hilfs-ID-Token umfasst zumindest eine Kommunikationsschnittstelle zur drahtlosen Kommunikation, welche dazu konfiguriert ist, die Gegenwart externer elektronischer Geräte innerhalb einer vordefinierten Signalreichweite der Kommunikationsschnittstelle zu erfassen.

Das Verfahren umfasst:
- Empfangen einer Mehrzahl von Kommunikationssignalen von einer Gruppe von externen Geräten,
- Authentifizieren der einzelnen Geräte der Gruppe,
- Erstellen eines Authentifizierungsprofils der authentifizierten Gruppe von Geräten,
- Vergleichen des Authentifizierungsprofils mit einem vorgegebenen Geräteprofil, welches eine dem Nutzer zugeordnete Gruppe von Geräten identifiziert,
- im Falle einer hinreichenden Übereinstimmung mit dem Geräteprofil, Bestätigung der erfolgreichen Authentifizierung des Nutzers.

Der Begriff "Hilfs-ID-Token" bezeichnet ein tragbares elektronisches Gerät, welches dazu konfiguriert ist einen Nutzer unter Verwendung einer Mehrzahl zusätzlicher externer elektronischer Geräte zu authentifizieren. Dem Nutzer und/oder seinem Umfeld sind dabei bestimmte Geräte zugeordnet. Diese Zuordnung kann beispielsweise durch eine Registrierung der entsprechenden Geräte zum Zwecke der Nutzerauthentifizierung erfolgen. Zusätzlich oder alternativ kann der Hilfs-ID-Token dazu konfiguriert sein, kontinuierlich zu protokollieren, die Gegenwart welcher elektronischen Geräte unter welchen Rahmenbedingungen erfasst werden. Darauf aufbauend kann der Hilfs-ID-Token Geräteprofile erstellen, welche für den Nutzer unter den entsprechenden Rahmenbedingungen charakteristisch sind. Die Gegenwart externer elektronischer Geräte lässt sich beispielsweise dadurch bestimmen, dass zur Kommunikation mit diesen eine drahtlose Kommunikationsverbindung mit begrenzter Signalreichweite verwendet wird. Wird ein zur Kommunikation ausreichend starkes Signal erfasst, so kann darauf geschlossen werden, dass das Gerät, von welchem das Signal erfasst wird, innerhalb eines Radius, der durch die maximakle Signalreichweite definiert wird, zugegen ist.

Unter einem "ID-Token" wird hier insbesondere ein tragbares elektronisches Gerät verstanden, welches einem Nutzer zugeordnete Attribute bereitstellt. Attribute sind Daten, anhand derer ein Nutzer authentifiziert werden kann. Die Attribute sind beispielsweise in einem Speicher des ID-Tokens gespeichert. Hierbei können die Attribute insbesondere in einem geschützten elektronischen Datenspeicher gespeichert sein. Zum Bereitstellen der Attribute weist der ID-Token zumindest eine Kommunikations-Schnittstelle auf, welche ein Auslesen und/oder Versenden der Attribute ermöglicht. Der Speicherbereich kann geschützt sein, um zu verhindern, dass das in dem Speicherbereich gespeicherte Attribut in unerlaubter Weise verändert oder ohne die dafür erforderliche Berechtigung ausgelesen wird. Mit anderen Worten kann auf einen geschützten Speicherbereich nur dann zugegriffen werden, wenn eine hierzu erforderliche Zugriffberechtigung gegeben ist.

Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Bei dem ID-Token kann es sich um einen Hardwaretoken handeln oder um einen Softtoken, wenn dieser kryptografisch an einen Hardwaretoken, das heißt beispielsweise an ein sogenanntes Secure Element, gebunden ist.

Ferner kann ein ID-Token einen Sensor umfassen, welche dazu konfiguriert ist Sensordaten zu erfassen anhand derer ein Nutzer authentifiziert werden kann. Mit anderen Worten kann der ID-Token dazu konfiguriert sein, Attribute bzw. Attributwerte zu erfassen.

Ein ID-Token stellt die Attribute beispielsweise einem Hilfs-ID-Token zur Verfügung, welcher Nutzer unter Verwendung der bereitgestellten Attribute zu authentifiziert. Mithin kann es sich bei einem ID-Token um ein externes elektronisches Gerät im zuvor genannten Sinne handeln.

Der Hilfs-ID-Token übernimmt dabei zugleich die Funktion eines ID-Providers, d.h. bei erfolgreicher Authentifizierung des Nutzers stellt er einen Authentifizierungstoken zur Verfügung. Der Authentifizierungstoken umfasst beispielsweise ein dem Nutzer zugeordnetes Attribut bzw. Daten, welche den Nutzer oder eine Eigenschaft des Nutzers identifizieren. Ferner bestätigt der Authentifizierungstoken, beispielsweise durch eine Signatur des Hilfs-ID-Tokens, die erfolgreiche Authentifizierung des Nutzers sowie die Zuordnung des Attributs zu dem authentifizierten Nutzer. Schließlich kann der Authentifizierungstoken noch weitere Informationen über den Nutzer und/oder den Authentifizierungsvorgang umfassen.

Bei einem solchen Attribut kann es sich beispielsweise um eine Angabe bezüglich der Identität des authentifizierten Nutzers handeln, insbesondere bezüglich dessen digitaler Identität. Attribute können beispielsweise umfassen: Name, Vorname und/oder Adresse. Ein Attribut kann alternativer Weise aber auch nicht der Feststellung der Identität des Nutzers, sondern beispielsweise zur Überprüfung der Berechtigung des Benutzers zur Inanspruchnahme eines bestimmten Dienstes und/oder Funktionalität dient, wie zum Beispiel das Alter des Nutzers oder ein anderes Attribut, welches die Zugehörigkeit des Nutzers zu einer bestimmten Gruppe dokumentiert mit bestimmten Berechtigungen.

Unter einem "ID-Provider" oder einem "ID-Provider-Gerät" wird hier ein elektronisches Gerät, beispielsweise ein Computer bzw. Computersystem, verstanden welches dazu ausgebildet ist, eine erfolgreiche Authentifizierung eines Nutzers zu bestätigen. Anhand der Bestätigung der Authentifizierung wird dem Nutzer die zu bestätigende ID zugeordnet. Ein "ID-Provider" kann zudem dazu konfiguriert sein einen Nutzer zu authentifizieren. Ferner kann ein "ID-Provider" dazu konfiguriert sein, Attribute aus einem ID-Token eines Nutzers auszulesen. Ein ID-Provider verfügt z.B. über spezifische Berechtigungsnachweise, z.B. Zertifikate oder kryptographische Schlüssel oder dergleichen, die dem ID-Provider einen Zugriff auf bestimmte ausgewählte Speicherbereiche eines ID-Tokens erlauben.

Der Hilfs-ID-Token kann eindeutig einem bestimmten Nutzer zugeordnet sein. Ist der Hilfs-ID-Token eindeutig einem bestimmten Nutzer zugeordnet, so kann er insbesondere dazu verwendet werden, kontinuierlich zu erfassen, welche externen Geräte in Signalreichweite des Hilfs-ID-Tokens sind. Aus den so erfassten Daten kann der Hilfs-ID-Token mithilfe eines entsprechenden Algorithmus Muster identifizieren, welche für den Nutzer charakteristisch sind. Diese Muster charakteristischer Gerätegruppe können als Geräteprofile verwendet werden, welche dem Nutzer zugeordnet sind und als Referenzprofile dienen, um zu bestimmen, ob ein aktuell erfasstes Profil dem Nutzer zuzuordnen ist. Auf Basis eines solchen Vergleichs kann der Nutzer zuverlässig authentifiziert werden.

Ein Hilfs-ID-Token kann entweder als ein eigenständiges Gerät konfiguriert sein, welches ausschließlich der zur Nutzerauthentifizierung ausgelegt ist, oder aber in ein anderes tragbares elektronisches Gerät, wie beispielsweise ein mobiles Telekommunikationsgerät, insbesondere ein Smartphone, integriert sein.

Bei den entsprechenden zusätzlichen externen elektronischen Geräten handelt es sich im allgemeinsten Sinne um informationstechnisch aufgerüstete Gegenstände, welche dazu konfiguriert sind mit dem Hilfs-ID-Token über eine drahtlose Kommunikationsverbindung mit begrenzter Signalreichweite zu kommunizieren. Diese Geräte sind in dem Sinne extern, dass sie mechanisch nicht mit dem Hilfs-ID-Token verbunden sind, so dass sich der Hilfs-ID-Token unabhängig von den externen Geräten frei bewegbar ist.

Insbesondere kann es sich bei den externen elektronischen Geräten ebenfalls um tragbare Geräte handeln. Beispielsweise handelt es sich um sog. "wearables" bzw. "wearable computers", d.h. tragbare elektronische Geräte bzw. tragbare Computersysteme, welche während der Anwendung am Körper des Nutzers angeordnet sind. Beispiele für Wearables sind Smartwatches, d.h. Uhren mit Computerfunktionalität und -konnektivität, Activity Tracker, d.h. Gerät zur Aufzeichnung und Versendung fitness- und/oder gesundheitsrelevanter Daten, Smartglasses, d.h. Brillen, deren Innenseiten als Bildschirm dienen, oder Kleidungsstücke, in die elektronische Hilfsmittel zur Kommunikation eingearbeitet sind.

Ferner kann es sich bei den zusätzlichen externen elektronischen Geräten um einen tragbaren Computer, wie zum Beispiel einen Laptop oder Palmtop-Computer, einen Personal Digital Assistant, ein mobiles Telekommunikationsgerät, insbesondere ein Smartphone, oder dergleichen handeln. Nach weiteren Ausführungsformen kann es sich bei den zusätzlichen externen elektronischen Geräten auch um ein mit einem Computersystem ausgestattetes Fortbewegungsmittel, wie etwa ein Auto, Flugzeug, Schiff oder Zug mit Bordcomputer, handeln.

Nach weiteren Ausführungsformen kann es sich bei dem zusätzlichen externen elektronischen Geräten auch um ein Gerät handeln, dessen bestimmungsgemäßer Gebrauch ortsfest erfolgt, wie etwa ein Personalcomputer, ein Steuercomputer eines Smarthome-Systems, ein Access Point oder Router eines lokales WLAN-Netzwerks, ein Multimediagerät mit Computerfunktionalität und -konnektivität, wie etwa ein Smart-TV, ein Steuersystem einer Schließanlage oder ein "smart device" bzw. intelligenter Gegenstände, d.h. ein informationstechnisch aufgerüstete Alltagsgegenstände, welcher einen Mehrwert durch sensorgestützte Informationsverarbeitung und Kommunikation erhält.

Ein Authentifizierungsverfahren gilt als halbautomatisiert, wenn der sich authentisierende Nutzer keinerlei manuelle Dateneingabe vornehmen muss. Ein Authentifizierungsverfahren gilt als vollautomatisiert, wenn der sich authentisierende Nutzer keinerlei Handhabung mehr erledigen muss.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA oder Vertrauensdiensteanbieter/VDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter und/oder einen ZDA, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.
Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein Hashwert, welcher mit einem privaten Schlüssel eines kryptographischen Schlüsselpaares verschlüsselt ist, das einem Zertifikat zugeordnet ist. Die Besonderheit einer solchen Signatur besteht darin, dass deren Urheberschaft und Zugehörigkeit zu einer bestimmten Person oder Instanz durch jeden Dritten geprüft werden kann.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen mit dem Speicher gekoppelten Prozessor möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Bei einem Computer bzw. einem Computersystem kann es sich zum Beispiel um einen Personal Computer (PC) oder einen Laptop handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet, ein Energieversorgungsnetz oder ein anderes Kommunikationsnetz. Je nach Ausführungsform kann diese Verbindung auch über ein Mobilfunknetz hergestellt werden.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Unter einer Kommunikationsschnittstelle zur drahtlosen Kommunikation wird eine Kommunikationsschnittstelle, welche zum kontaktlosen Senden und Empfangen von Daten konfiguriert ist. Die Kommunikation kann beispielsweise nach einem RFID- und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Unter einem "Netzwerk" wird hier jedes Übertragungsmedium mit einer Anbindung zur Kommunikation verstanden, insbesondere eine lokale Verbindung zwischen dem Hilfs-ID-Token und dem Computersystem oder ein lokales Netzwerk, insbesondere ein Local Area Network (LAN), ein privates Netzwerk, insbesondere ein Intranet, und ein virtuelles privates Netzwerk (Virtual Private Network - VPN). Beispielsweise kann der Hilfs-ID-Token ebenso wie das Computersystem eine Standardfunkschnittstelle zur Anbindung an ein WLAN aufweisen, an das der Hilfs-ID-Token und/oder das Computersystem zur Herstellung einer lokalen Verbindung für die Übertragung des Authentifizierungstokens angeschlossen sein kann.

Unter einem "Sensor" wird hier ein Element zum Erfassen von Messdaten verstanden. Messdaten sind Daten, welche physikalische oder chemische Eigenschaften eines Messobjekts, wie beispielsweise Wärmemenge, Temperatur, Feuchtigkeit, Druck, Schallfeldgrößen, elektromagnetische Feldstärke, Helligkeit, Beschleunigung, Lageänderung, pH-Wert, lonenstärke, elektrochemisches Potential, und/oder dessen stoffliche Beschaffenheit qualitativ oder quantitativ wiedergeben. Messdaten werden mittels physikalischer oder chemischer Effekte erfasst und in ein elektronisch weiterverarbeitbares elektrisches Signal umgeformt.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht dient.

Der Schlüssel zum Authentifizieren des Senders der Nachricht kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt und die Nachricht wurde während der Übertragung nicht verändert.

Gemäß einem Request-Response-Protokoll schickt ein erster Teilnehmer einer zweiseitigen Kommunikation einen sogenannten Request (Anforderung) an den zweiten Teilnehmer. Ein Request enthält einen oder mehrere Befehle, welche angeben, welche Funktionen der zweiten Teilnehmer ausführen soll. Nachdem der zweite Teilnehmer den oder die Befehle gemäß Request verarbeitet hat, antwortet er mit einer Response (Antwort).

Nutzer umgeben sich im Alltag in immer höherem Maße mit elektronischen Geräten, welche Computerfunktionalität und -konnektivität aufweisen. Ein Trend ist die zunehmende Verbreitung von Wearables, d.h. Computersystemen, die während der Anwendung am Körper des Nutzers angeordnet sind. Ein weiterer Trend ist das Ersetzen von Gegenstände des Alltags durch "intelligente Gegenstände" (auch "smart devices" genannt), welche informationstechnisch aufgerüstete und dazu konfiguriert sind selbst Informationen zu verarbeiten. Diese intelligenten Gegenstände sind mit datenverarbeitender Hardware ausgerüstet, wie etwa einem eingebauten Mikrocontroller, Kommunikationsschnittstellen und/oder Sensoren, sodass sie Daten erfassen, speichern und/oder untereinander austauschen können. Ein Schlagwort für diese Entwicklung ist beispielsweise das sogenannte Internet der Dinge (abgekürzt auch IoT von "internet of things").

Ausführungsformen können den Vorteil haben, dass zur Authentifizierung eines Nutzers ein charakteristisches, dem Nutzer zugeordnetes Geräteprofil verwendet werden kann. Ein solches Geräteprofil ergibt sich aus dem Umstand, sich jeder Nutzer in seinem Alltag mit einer individuellen Kombination von elektronischen Geräten umgibt, welche in Form eines oder mehrere charakteristische Geräteprofils zur Authentifizierung des Nutzers hinterlegt werden können.

Eine Authentifizierung auf Basis der Anwesenheit einer Mehrzahl elektronischer Geräte kann ferner den Vorteil haben, dass die Authentifizierung halb- und sogar vollautomatisch ausführbar ist. Weder muss der Nutzer aktiv einen Faktor zur Authentifizierung bereitstellen, wie etwa ein Benutzername, Passwort, PIN, TAN, noch kann es passieren, dass der Nutzer einen auf Wissen basierenden Faktor vergisst. Zugleich gewährleistet die Verwendung einer Mehrzahl von externen Geräten zur Authentifizierung ein hohes Maß an Sicherheit. Beispielsweise sind mindestens drei, vier, fünf oder zehn Geräte bzw. Faktoren für eine erfolgreiche Authentifizierung notwendig.

Die Bestätigung einer erfolgreichen Authentifizierung kann durch das Erstellen und/oder Senden eines Authentifizierungstokens erfolgen. Alternativ kann die Bestätigung auch durch protokollieren der erfolgreichen Authentifizierung in einer Protokolldatei des Hilfs-ID-Tokens erfolgen. Ein solches Protokollieren kann insbesondere vorteilhaft sein für eine kontinuierliche Authentifizierung ("continuous authentification"), bei der kontinuierlich (oder in kurzen diskreten Abständen) geprüft wird, ob der Hilfs-ID-Token von einem Nutzer mitgeführt wird, welcher dem Hilfs-ID-Token zugeordnet ist, d.h. einem Nutzer auf dessen Geräteprofil der Hilfs-ID-Provider Zugriff besitzt.

Eine Authentifizierung der externen elektronischen Geräte kann beispielsweise auf einem niedrigen Sicherheitsniveau erfolgen, wobei das zu authentifizierende Gerät über eine UID ("unique identifier"), d.h. einen eindeutigen Identifikator, wie etwa eine Seriennummer, verfügt und diese an den Hilfs-ID-Token sendet. Die Authentifizierung erfolgt seitens des Hilfs-ID-Tokens durch Vergleich der empfangenen UID mit einer Liste bekannter und/oder registrierter UIDs. Ferner kann die Authentifizierung auf einem hohen Sicherheitsniveau erfolgen, wobei verschlüsselte Nachrichten, beispielsweise Zufallszahlen, ausgetauscht und Zertifikate verwendet werden.

Nach Ausführungsformen ist der Hilfs-ID-Token clientseitig vorgesehen. Der Hilfs-ID-Token sammelt aus der Clientumgebung Merkmale, welche einem Nutzer zugeordnet sind und zu dessen Authentifizierung beizutragen vermögen. Diese Merkmale werden durch externe Geräte bereitgestellt, welche sich in der Clientumgebung befinden. Beispielsweise kommuniziert der Hilfs-ID-Token hierzu mit verschiedenen Geräten des Nutzers und/oder der Umgebung des Nutzers.

Nach Ausführungsformen erfolgt die Erfassung externer Geräte in der Umgebung des Hilfs-ID-Tokens zeitlich fortgesetzt, d.h. kontinuierlich. Nach Ausführungsformen ermöglicht die zeitlich fortgesetzte Erfassung externer Geräte eine prädiktive Authentifizierung bzw. "predictive authentification", wobei das für eine aktuelle Authentifizierung verwendete Geräteprofil dynamisch aus zuvor erstellten Authentifizierungsprofilen "vorhergesagt" bzw. bestimmt wird.

Nach Ausführungsformen kann mittels des Hilfs-ID-Tokens ein Nutzer authentifiziert werden, wenn verschiedene Geräte, welche zu diesem Zweck verwendet werden vorher bei dem Hilfs-ID-Token angemeldet wurden.

Durch eine beschränkte Signalreichweite des für die Nutzerauthentifizierung verwendeten Kommunikationsverfahrens kann sichergestellt werden, dass diese Geräte sowie von diesen Geräten möglicherweise umfasste Sensoren innerhalb eines vordefinierten maximalen Abstands von dem Hilfs-ID-Token angeordnet sind. Andernfalls wird die Integrität der Authentifizierung gebrochen.

Externe Geräte zur Nutzerauthentifizierung können insbesondere in Form von Wearables, Mobile Devices und anderen Geräten bereitgestellt werden, welche den zu authentisierenden Nutzer begleiten und über welche der Nutzer Kontrolle besitzt. Der Hilfs-ID-Token dient als zentrale Einheit an dem Nutzer zur Erfassung der externen Geräte zur Nutzerauthentifizierung und kann den Nutzer somit gegenüber einem Hintergrundsystem, d.h. einem Computersystem mit welchem der Hilfs-ID-Token kommuniziert, authentifizieren.

Beispielsweise kann der Hilfs-ID-Token mit einem Smarthome-System kommunizieren. Verlässt der Hilfs-ID-Token nun das Gebäude, wobei sich die Geräte zur Nutzerauthentifizierung nicht aus der Signalreichweite des Hilfs-ID-Tokens, z.B. einem Radius von 2 m, entfernen, so weiß das Smarthome-System, dass der authentifizierte Nutzer das Gebäude verlassen hat und kann entsprechenden darauf reagieren. Beispielsweise wird automatisch das Licht ausgeschaltet oder das Raumklima neu reguliert.

Beispielsweise kann das Einchecken am Flughafen so erfolgen, dass das Gate beim Boarding des Flugzeugs als Default offen ist, und nur dann geschlossen wird, um punktuell einen Passagier zu überprüfen, wenn dies erforderlich erscheint. Hierzu kann die Authentifizierung eines Passagiers bereits zu einem frühen Zeitpunkt starten, indem bereits Daten über externe Geräte aus dem häuslichen Umfeld und/oder von dem Auto des Nutzers und/oder dessen Transport mit öffentlichen Verkehrsmitteln auf dem Weg zum Flughafen gesammelt werden. Aus diesen Daten ergibt sich ein dynamisches Authentifizierungsprofil, welches mit einem erwarteten Geräteprofil des Nutzers abgeglichen wird. Das erwartete Geräteprofil kann beispielsweise aus einem typischen Verhaltensmuster des Passagiers abgeleitete sein. Beispielsweise kann dem Passagier, falls das erfasste Authentifizierungsprofil ein Auto umfasst, ein freier Parkplatz für sein Auto vorgeschlagen werden. Insbesondere kann dem Passagier ein Parkplatz vorgeschlagen werden, welcher sich in der Nähe zu seinem Terminal und/oder Gate befindet. Fährt der Passagier normalerweise den vorgeschlagenen Parkplatz an, im vorliegenden Fall aber einen nicht vorgeschlagenen Parkplatz, so bedeutet dies auf ein atypisches Nutzerverhalten hin, was dazu führen kann, dass der Nutzer am Gate überprüft wird.

Nach Ausführungsformen weist der Hilfs-ID-Token ferner Mittel zum Schutz gegen unbefugte Manipulationen auf. Durch die Mittel zum Schutz gegen unbefugte Manipulationen wird durch technische Maßnahmen die Vertrauenswürdigkeit des Hilfs-ID-Tokens, das heißt seine Funktion als "Vertrauensanker", gewährleistet. Beispielsweise wird der Hilfs-ID-Token von einer vertrauenswürdigen Institution, wie z.B. durch ein Trust-Center (Trust Service Provider), konfiguriert und mit dem benötigten kryptografischen Schlüsselmaterial versehen. Durch die Mittel zum Schutz gegen unbefugte Manipulationen kann sichergestellt werden, dass sicherheitsrelevante Funktionalitäten des Hilfs-ID-Tokens nicht modifiziert werden.

Nach einer Ausführungsform der Erfindung sind die Mittel zum Schutz des Hilfs-ID-Tokens gegen unbefugte Manipulationen als ein so genanntes Tamper Proof Module oder Trusted Platform Module (TPM) ausgebildet, welche auch als Tamper Resistant Module (TRM) bezeichnet werden. Beispielsweise sind zumindest Teile des Hilfs-ID-Tokens signiert, wie z.B. Programmkomponenten und/oder Hardwarekomponenten, die eine digitale Signatur tragen können. Insbesondere können das Betriebssystem, das Binary Input Output System (BIOS), eine Konfigurationsdatei und/oder ein Massenspeichermedium des Hilfs-ID-Tokens digital signiert sein. Vor einer Nutzung des Hilfs-ID-Tokens prüft das TRM dann, ob die Signatur bzw. die Signaturen, valide sind. Wenn eine der Signaturen nicht valide ist, sperrt das TRM die Nutzung des Hilfs-ID-Tokens. Ein TPM umfasst Mikrokontroller nach der TCG-Spezifikation wie in ISO/IEC 11889, der einen Computer oder ähnliche Geräte um grundlegende Sicherheitsfunktionen erweitert.

Nach einer Ausführungsform der Erfindung beinhalten die Mittel zum Schutz des Hilfs-ID-Tokens gegen unbefugte Manipulationen mechanische Mittel, die z.B. das Öffnen des Hilfs-ID-Tokens oder seiner Teile verhindern sollen, oder die bei dem Versuch eines Eingriffs in den Hilfs-ID-Token dieser unbrauchbar machen, beispielsweise indem ein Datenverlust eintritt. Beispielsweise können hierzu sicherheitskritische Teile des Hilfs-ID-Tokens in Epoxidharz eingegossen sein, wobei ein Versuch, eine betreffende Komponente aus dem Epoxidharz zu entfernen, zu einer unvermeidlichen Zerstörung dieser Komponente führt. Insbesondere können die Mittel zum Schutz des Hilfs-ID-Tokens gegen unbefugte Manipulationen als ein so genanntes Hardware Security Modul (HSM) ausgebildet sein.

Nach Ausführungsformen wird das Verfahren kontinuierlich ausgeführt und die Authentifizierung des Nutzers kontinuierlich überprüft. Anhand dieser über einen ausgedehnten Zeitraum ausgeführten Authentifizierungsvorgängen kann ein Profil des Nutzers erzeugt werden. Ausführungsformen können den Vorteil haben, dass nicht nur Momentaufnahmen zur Authentifizierung herangezogen, sondern die Authentifizierung vielmehr über einen längeren Zeitraum konsistent sein muss. Das so erzeugte Profil kann zur Identifizierung unterstützend herangezogen werden.

Nach Ausführungsformen umfasst das vorgegebene Geräteprofil zumindest ein tragbares externes Gerät, welches ausschließlich dem Nutzer zugeordnet ist, und wobei es eine notwendige Bedingung für eine hinreichende Übereinstimmung ist, dass das Authentifizierungsprofil das ausschließlich dem Nutzer zugeordnete Gerät umfasst. Ausführungsformen können den Vorteil haben, dass der Nutzer mit hoher Sicherheit korrekt authentifiziert wird.

Nach Ausführungsformen umfasst das vorgegebene Geräteprofil zumindest ein ortsfest installiertes Gerät und wobei es eine notwendige Bedingung für eine hinreichende Übereinstimmung ist, dass das Authentifizierungsprofil das ortsfest installierte Gerät umfasst. Ausführungsformen können den Vorteil haben, dass zusätzlich der Aufenthaltsort des Nutzers als Authentifizierungskriterium mitherangezogen werden kann.

Nach Ausführungsformen umfasst das vorgegebene Geräteprofil zumindest ein Gerät, welches einer Gruppe von Nutzern zugeordnet ist, welche den dem Hilfs-ID-Token zugeordneten Nutzer umfasst, und wobei es eine notwendige Bedingung für eine hinreichende Übereinstimmung ist, dass das Authentifizierungsprofil das der Gruppe von Nutzern zugeordnete Gerät umfasst. Ausführungsformen können den Vorteil haben, dass auch Gegenstände einer gemeinsam von mehreren Personen genutzten elektronischen Infrastruktur, wie etwa ein Smart-Home-System eines Haushalts mit mehreren Personen oder ein gemeinsam genutztes Fahrzeug, zur Authentifizierung herangezogen werden können.

Nach Ausführungsformen umfasst das vorgegebene Geräteprofil zumindest ein Gerät, welches ausschließlich einem anderen Nutzer zugeordnet ist, und wobei es eine notwendige Bedingung für eine hinreichende Übereinstimmung ist, dass das Authentifizierungsprofil das ausschließlich dem anderen Nutzer zugeordnete Gerät umfasst. Ausführungsformen können den Vorteil haben, dass bei der Authentifizierung beispielsweise berücksichtigt werden kann, wenn regelmäßige Termine mit einem anderen Nutzer wahrgenommen werden. Zum Zeitpunkt des entsprechenden Termins sollte beispielsweise auch ein dem anderen Nutzer zugeordnetes Gerät zugegen sein.

Nach Ausführungsformen werden die authentifizierten Geräte des Authentifizierungsprofils beim Vergleichen mit dem vorgegebenen Geräteprofil unterschiedlich gewichtet. Ausführungsformen können den Vorteil haben, dass für eine erfolgreiche Authentifizierung insgesamt ein hinreichendes Vertrauensniveau erreicht werden. Beispielsweise ist davon auszugehen, dass der Nutzer nahezu immer sein Smartphone mitführen wird und dieses dem Nutzer im Allgemeinen eindeutig zuordenbar ist. Dieser starke Beleg für die Identität des Nutzers lässt sich durch eine größere Gewichtung abbilden. Andere Geräte werden seltener mitgeführt oder sind dem Nutzer nicht eindeutig zuordenbar, da sie leicht zugänglich und/oder von mehreren Personen genutzt werden. Diese Unsicherheit lässt sich durch eine geringere Gewichtung abbilden.

Nach Ausführungsformen ist die erfolgreiche Authentifizierung eines oder mehrerer Geräte des Geräteprofils fakultativ für die erfolgreiche Authentifizierung des Nutzers. Ausführungsformen können den Vorteil haben, dass Geräte, die vom Nutzer seltener mitgeführt werden oder deren Vorhandensein regelmäßig variiert, bei der Authentifizierung berücksichtigt werden können, ohne von diesen Geräten abhängig zu sein.

Nach Ausführungsformen ist das vorgegebene Geräteprofil zeit- und/oder ortsabhängig. Ausführungsformen können den Vorteil haben, dass berücksichtigt werden kann, dass Geräte in der Umgebung des Nutzers zeit- und/oder ortsabhängig variieren können.

Nach Ausführungsformen wird das Authentifizierungsprofil zeitlich fortgesetzt erstellt und die zeitliche Entwicklung des erfassten Authentifizierungsprofils beim Vergleich mit dem Geräteprofil berücksichtigt. Ausführungsformen können den Vorteil haben, dass Geräte in der Umgebung des Nutzers über einen längeren Zeitpunkt Berücksichtigt werden.

Nach Ausführungsformen wird das vorgegebene Geräteprofil dynamisch erstellt unter Verwendung eines von einer Anwendung des Hilfs-ID-Tokens bereitgestellten Profilerwartungsparameters. Nach Ausführungsformen wird das vorgegebene Geräteprofil dynamisch erstellt unter Verwendung eines dem Hilfs-ID-Token von einer Anwendung eines der authentifizierten Geräte bereitgestellten Profilerwartungsparameters. Ausführungsformen können den Vorteil haben, dass beispielsweise Termine aus einem Kalender des Nutzers berücksichtigt werden können. Aus dem Ort und/oder der Art des Termins sowie den teilnehmenden Personen kann beispielsweise abgeleitet werden, welche Geräte in der Umgebung des Nutzers zum Zeitpunkt des Termins zu erwarten sind.

Nach Ausführungsformen werden von einem oder mehreren der authentifizierten Geräte automatisch erfasste Sensordaten übermittelt und mit Referenzwerten verglichen, welche das vorgegebene Geräteprofil für die Sensordaten umfasst und sie charakteristisch für den zu authentifizierenden Nutzer sind. Ausführungsformen können den Vorteil haben, dass zusätzlich beispielsweise Ortsdaten, Umgebungsparameter und/oder biometrische Daten des Nutzers für die Authentifizierung verwendet werden können. Insbesondere werden Sensordaten herangezogen, welche halb- oder vollautomatisch erfasst werden. Nach Ausführungsformen umfasst der Hilfs-ID-Token zumindest einen Sensor zum Erfassen eines biometrischen Merkmals des Nutzers.

Nach Ausführungsformen umfasst das Geräteprofil ein Negativkriterium, bei dessen Erfüllung die Anforderungen an das Authentifizierungsprofil für eine hinreichende Übereinstimmung mit dem Geräteprofil erhöht werden. Beispielsweise können einzelne Geräte zeitweise ausfallen, vorübergehend durch Leihgräte ersetzt werden, vergessen werden, verloren- oder kaputtgehen, oder der Nutzer kann aufgrund äußerer Umstände ein für Ihn atypisches Verhalten an den Tag legen, welches sich auf die Zusammenstellung der ihn umgebenden elektronischen Geräte auswirkt. Ausführungsformen können den Vorteil haben, dass in den zuvor genannten Fällen eine sichere Authentifizierung des ermöglicht wird. Da die Abweichungen von der typische Weise zu erwartenden Zusammenstellung externer Geräte jedoch auf eine Unregelmäßigkeit und möglichen Manipulationsversuch hindeuten, kann durch eine Erhöhung der Anforderungen an das Authentifizierungsprofil für eine hinreichende Übereinstimmung die durch die Abweichung hervorgerufene Unsicherheit kompensiert werden.

Nach Ausführungsformen umfasst das Geräteprofil ein Ausschlusskriterium, bei dessen Erfüllung eine Authentifizierung des Nutzers gesperrt wird. Ausführungsformen können den Vorteil haben, dass bestimmte Geräte zugegen sein müssen, damit der Nutzer erfolgreich authentifiziert wird.

Nach Ausführungsformen wird das vorgegebene Geräteprofil von einem externen Computersystem bereitgestellt und der Vergleich umfasst: Senden des Authentifizierungsprofils an das externe Computersystem, in Antwort auf das Authentifizierungsprofil, empfangen des Vergleichsergebnisses. Ausführungsformen können den Vorteil haben, dass rechenintensive Analysen von dem externen Computersystem ausgeführt werden. Dadurch kann beispielsweise der Energieverbrauch durch den Hilfs-ID-Token reduziert werden, wodurch dessen Batterie geschont wird und länger hält. Zudem sind die Geräteprofile im Falle eines Verlusts des Hilfs-ID-Tokens geschützt. Die Kommunikation zwischen Hilfs-ID-Token und dem externen Computersystem sollte dabei vorteilhafter Weise verschlüsselt erfolgen.

Nach Ausführungsformen umfasst der Hilfs-ID-Token das vorgegebene Geräteprofil, welches in einem geschützten Speicherbereich eines nichtflüchtigen Speichers des Hilfs-ID-Tokens gespeichert ist. Ausführungsformen können den Vorteil haben, dass der Nutzer die Verfügungshoheit über seine persönlichen Daten behält.

Nach Ausführungsformen sind für den Hilfs-ID-Token mehrere Geräteprofile bereitgestellt, welche jeweils einem anderen Nutzer zugeordnet sind, und das Authentifizierungsprofil mit jedem der Geräteprofile verglichen wird. Ausführungsformen können den Vorteil haben, dass ein Hilfs-ID-Token von mehreren Personen abwechselnd genutzt werden kann.

Nach Ausführungsformen wird die Nutzerauthentifizierung auf den Empfang einer Authentifizierungsanfrage von einem Computersystem zur Authentifizierung des Nutzers durch den Hilfs-ID-Token sowie einer erfolgreichen Authentifizierung des anfragenden Computersystems hin ausgeführt und ein Authentifizierungstoken an das Computersystem übermittelt. Nach Ausführungsformen umfasst die Authentifizierung des Computersystems durch den Hilfs-ID-Token: Empfang und Validierung eines Zertifikats des Computersystems. Ausführungsformen können den Vorteil haben

Nach Ausführungsformen wird das Verfahren auf den Empfang der Authentifizierungsanfrage und der Authentifizierung des Computersystems hin vollautomatisch ausgeführt. Ausführungsformen können den Vorteil haben, dass der Nutzer automatisch erkannt wird und keine zusätzlichen Handlungen vornehmen muss.

Nach Ausführungsformen umfasst das Verfahren auf eine erfolgreiche Authentifizierung des Nutzers hin ferner: Freigabe eines Lesezugriffs des Computersystems auf dem Nutzer zugeordnete Daten, auf welche der Hilfs-ID-Token Zugriff besitzt. Ausführungsformen können den Vorteil haben, dass beispielsweise fitness- und/oder gesundheitsrelevanter Daten, welche von Sensoren der externen Geräte erfasst werden für einen Lesezugriff freigegeben werden. Insbesondere können die entsprechenden Daten beispielsweise von mehreren Geräten bereitgestellt und durch eine Applikation des Hilfs-ID-Tokens gebündelt werden.

Nach Ausführungsformen beinhaltet das Zertifikat des Computersystems eine Angabe derjenigen Daten, für welche das Computersystem zu dem Lesezugriff berechtigt ist, wobei das Verfahren ferner umfasst: Prüfung der Berechtigung des Computersystems für den Lesezugriff auf die Daten unter Verwendung des Zertifikats. Ausführungsformen können den Vorteil haben, dass sichergestellt werden kann, dass nur ein berechtigtes Computersystem Zugriff auf sensible Daten erhält.

Nach Ausführungsformen umfassen die Daten eine Angabe des Aufenthaltsorts eines der externen Geräte. Ausführungsformen können den Vorteil haben, dass der Aufenthaltsort des Nutzers bereitgestellt wird.

Ausführungsformen umfassen ferner ein Computerprogrammprodukt, insbesondere ein computerlesbares, nichtflüchtiges Speichermedium, mit ausführbaren Programminstruktionen zur Ausführung eines Verfahrens nach einer der zuvor genannten Ausführungsformen. Ausführungsformen umfassen ferner einen Hilfs-ID-Token, welcher dazu konfiguriert ist, ein Verfahren nach einer der zuvor genannten Ausführungsformen auszuführen. Ausführungsformen umfassen ferner ein System, welches einen Hilfs-ID-Token nach einer der zuvor genannten Ausführungsformen sowie eine Gruppe von externen Gräten umfasst, welche zur Ausführung eines Verfahrens nach einer der zuvor genannten Ausführungsformen durch den Hilfs-ID-Token konfiguriert und registriert sind. Ausführungsformen umfassen ferner ein System, welches einen Hilfs-ID-Token nach einer der zuvor genannten Ausführungsformen sowie ein Computersystem umfasst und zum Ausführen eines Verfahrens nach einer der zuvor genannten Ausführungsformen konfiguriert ist.

Im Weiteren werden Ausführungsformen der Erfindung mit Bezugnahme auf die Zeichnungen näher erläutert. Es zeigen:
- Figur 1: ein Blockdiagramm einer Ausführungsform exemplarischer Computersysteme, und
- Figur 2: ein Flussdiagramm einer Ausführungsform eines exemplarischen Verfahrens.

Elemente der nachfolgenden Ausführungsformen, die einander entsprechen, werden mit denselben Bezugszeichen gekennzeichnet.

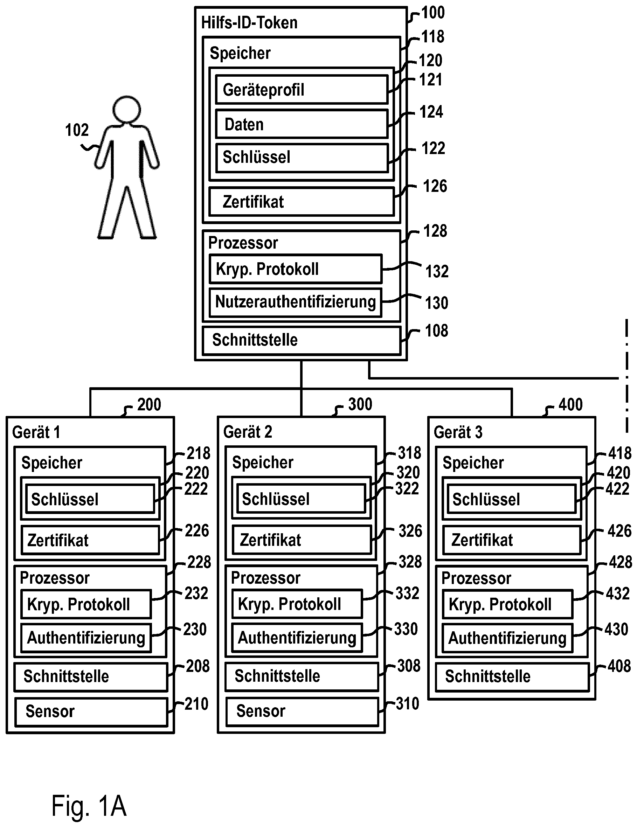

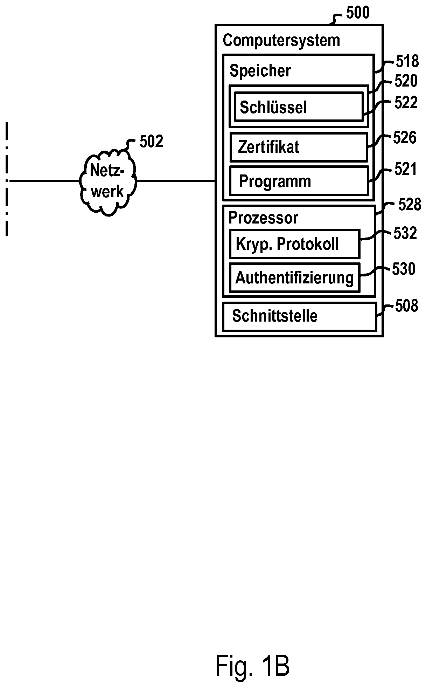

Die Figur 1 zeigt einen Hilfs-ID-Token 100 eines Nutzers 102. Bei dem Hilfs-ID-Token 100 kann es sich beispielsweise um ein eigenständiges Gerät handeln oder um einen Personal Digital Assistant, ein mobiles Telekommunikationsgerät, insbesondere ein Smartphone, oder dergleichen handeln. Der Hilfs-ID-Token 100 hat eine Schnittstelle 108 zur Kommunikation mit externen elektronischen Geräten 200, 300, 400, welche jeweils eine entsprechende Schnittstelle 208, 308, 408 aufweisen. Die Kommunikation beruht dabei auf einem Funkstandard mit begrenzter Signalreichweite. Hierbei kann es sich insbesondere um eine Nahfeldkommunikation, beispielsweise mittels RFID, Bluetooth oder WLAN handeln. Beispielsweise erfolgt die Kommunikation entsprechend der Norm ISO 14443 drahtlos mit einer Frequenz von 13,56 MHz oder per Bluetooth Klasse 3. Ferner kann die Schnittstelle 108 zur Kommunikation mit einer entsprechenden Schnittstelle 508 eines Computersystems 500 konfiguriert sein. Die Kommunikation kann auf dieselbe Weise wie mit den Geräten 200, 300, 400 oder nach einem anderen Standard, beispielsweise per WLAN über ein Netzwerk 502 erfolgen. Bei dem Netzwerk 502 kann es sich beispielsweise um ein öffentliches Computernetzwerk, wie etwa das Internet, handeln.

Der Hilfs-ID-Token 100 umfasst zumindest einen Prozessor 110 zur Ausführung von Programminstruktionen 130. Die Programminstruktionen 130 dienen zur Nutzerauthentifizierung, d.h. zur Authentifizierung des Nutzers 102 durch den Hilfs-ID-Token 100. Der Hilfs-ID-Token 100 umfasst ferner einen elektronischen Speicher 118 mit einem geschützten Speicherbereich 120. Der geschützte Speicherbereich 120 dient zur Speicherung eines Geräteprofils 121, das für die Authentifizierung des Nutzers 102 durch den Hilfs-ID-Token 100 benötigt wird.

Der geschützte Speicherbereich 120 dient ferner zur Speicherung eines privaten Schlüssels 122, welcher dem Hilfs-ID-Token 100 zugeordnet ist. Darüber hinaus können in dem Speicher 118, beispielsweise auch in dem geschützten Speicherbereich 120, Daten des Nutzers 102 gespeichert sein. Diese Daten 124 können beispielsweise der aktuelle Aufenthaltsort des tragbaren Hilfs-ID-Token 100 und/oder der elektronischen Geräten 200, 300, 400 umfassen, welcher bei erfolgreicher Authentifizierung des Nutzers 102, aus welcher im vorliegenden Fall automatisch auf die Gegenwart des Nutzers 102 geschlossen werden kann, dem Aufenthaltsort des Nutzer 102 entspricht. Ferner können die Daten 124 Attribute des Nutzers, wie seinen Namen umfassen. Darüber können die Daten 124 auch Sensordaten umfassen, welche beispielsweise mit den Sensoren 210, 310 der Geräte 200, 300 erfasst werden. Diese Sensordaten können beispielsweise durch den Hilfs-ID-Token 100 gebündelt und für zugriffsberechtigte Computersysteme, wie etwa das Computersystem 500, bereitgestellt werden. Bei diesen Sensordaten handelt es sich beispielsweise um fitness- und/oder gesundheitsrelevanter Daten.

In dem elektronische Speicher 118 kann ferner ein Zertifikat 126 gespeichert sein. Das Zertifikat 126 beinhaltet einen öffentlichen Schlüssel, der dem in dem geschützten Speicherbereich 120 gespeicherten privaten Schlüssel 122 zugeordnet ist. Das Zertifikat 126 kann nach einem Public Key Infrastruktur (PKI) Standard erstellt worden sein, beispielsweise nach dem X.509 Standard.

Durch Ausführung der Programminstruktionen 130 werden über die Schnittstelle 108 die in Signalreichweite der Schnittstelle 108 angeordneten externen elektronischen Geräten 200, 300, 400 erfasst und authentifiziert. Auf Basis der externen elektronischen Geräten 200, 300, 400, deren Gegenwart erfasst und die erfolgreich authentifiziert wurden, wird ein Authentifizierungsprofil erstellt. Ferner wird auf den geschützten Speicherbereich 120 zugegriffen, um das erstellte Authentifizierungsprofil mit dem dort gespeicherten Geräteprofil 121 als Referenzprofil zu vergleichen. Für den Fall, dass das Authentifizierungsprofil mit dem Geräteprofil 121 hinreichend übereinstimmt, gilt der Nutzer 102 als authentifiziert. Genauer gesagt gilt der Nutzer als mit hinreichender Wahrscheinlichkeit authentifiziert. Die Anzahl und Art der für eine hinreichende Wahrscheinlichkeit zu authentifizierenden Geräte 200, 300, 400 hangt von dem zu erzielenden Maß an Sicherheit ab und kann insbesondere in Abhängigkeit davon variieren, wofür der Nutzer 102 zu authentifizieren ist. Die Vertrauenswürdigkeit des Hilfs-ID-Tokens 100 kann durch ein Sicherheitsmodul zusätzlich erhöht werden. Ein solches Sicherheitsmodul des Hilfs-ID-Tokens 100 kann beispielsweise als TPM ausgebildet sein. Alternativ oder zusätzlich kann der Hilfs-ID-Tokens 100 teilweise oder insgesamt als HSM ausgebildet sein.

Nach Ausführungsformen können die Sensoren 210, 310 ferner zur Erfassung eines biometrischen Merkmals des Nutzers 102 konfiguriert sein, insbesondere zu einer vollautomatischen Erfassung. Bei dem biometrischen Merkmal kann es sich beispielsweise um ein Beschleunigungsmuster, Herzschlagfrequenz, Venenmuster, Irismuster, Retinamuster, Stimmenmuster, Gangmuster, Tastaturdynamik, Unterschriftmuster, Berührungsmuster bei der Handhabung und/oder Fingerabdruck. Hierzu handelt es sich bei einem der Sensoren 210, 310 der Geräte 200, 300 beispielsweise um einen Beschleunigungssensor, Pulsmesser, Berührungssensor, beispielsweise in Form eines Touchscreens, und/oder einen Fingerabdrucksensor, welcher vorzugsweise in einem Bereich angeordnet ist, in dem bei einer bestimmungsgemäßen Verwendung des entsprechenden Geräts 200, 300 üblicherweise ein Finger des Nutzers aufgelegt wird. Die von dem Nutzer 102 erfassten biometrischen Daten werden durch Ausführung der Programminstruktionen 130 bei dieser Ausführungsform über einen kryptographisch gesicherten Kommunikationskanal von dem entsprechenden Gerät 200, 300 an den Hilfs-ID-Token 100 übertragen und mit in dem geschützten Speicherbereich 120 gespeicherten biometrischen Referenzdaten des Geräteprofils 121 verglichen.

Die Authentifizierung der Geräte 200, 300, 400 erfolgt durch Ausführen der Programminstruktionen 130, welche ein Protokoll zur Nutzerauthentifizierung implementieren. Die Geräte 200, 300, 400 umfassen jeweils zugehörige Programminstruktionen 230, 330, 430 zur Authentifizierung der entsprechenden Geräte 200, 300, 400 gegenüber dem Hilfs-ID-Token 100 im Zuge der Ausführung der Programminstruktionen 130. Zur gesicherten Datenübertragung führt das Hilfs-ID-Token 100 ein kryptographischen Protokoll 132 auf, beispielsweise zum Ausführen eines Challenge-Response-Protokoll basierend auf einem symmetrischen Schlüssel oder einem asymmetrischen Schlüsselpaar. Die Geräte 200, 300, 400 weisen entsprechende kryptographischen Protokoll 232, 332, 432 auf, ebenso wie das Computersystem 500 mit dem kryptographischen Protokoll 532.

Die Geräte 200, 300, 400 umfassen jeweils eine Schnittstelle 208, 308, 408 zur Kommunikation mit der Schnittstelle 108 des Hilfs-ID-Tokens 100. Die Geräte 200, 300, 400 umfassen ferner jeweils einen Speicher 218, 318, 418, in denen jeweils in einem geschützten Speicherbereich 220, 320, 420 ein privater Schlüssel 222, 322, 422 gespeichert ist. Zudem ist in den Speichern 218, 318, 418 jeweils ein dem entsprechenden privaten Schlüssel 222, 322, 422 zugeordnetes Zertifikat 226, 326, 426 gespeichert ist. Auch bei diesen Zertifikaten 226, 326, 426 kann es sich beispielsweise um Zertifikate nach einem PKI-Standard, wie zum Beispiel X.509 handeln.

Darüber hinaus umfassen die Geräte 200, 300, 400 jeweils zumindest einen Prozessor 228, 328, 428 zur Ausführung von Programminstruktionen 230, 330, 430. Durch Ausführung der Programminstruktionen 230, 330, 430 erfolgt die Authentifizierung des jeweiligen Geräts 200, 300, 400 gegenüber dem Hilfs-ID-Token 100 unter Verwendung der jeweiligen kryptographischen Protokolle 232, 332, 432.

Die Sensoren 210, 310 sind mit den Geräte 200, 300 operativ verbunden, dabei können die Sensoren 210, 310 beispielsweise in die Geräte 200, 300 integriert und/oder mit diesen mechanisch verbunden sein. Nach Ausführungsformen können Sensoren 210, 310 als eigenständige externe Komponenten vorgesehen sein. Die Sensoren 210, 310 können über eine kabellose oder kabelgebundene Kommunikationsverbindung zum Übertragen von Sensordaten mit den Geräten 200, 300 verbunden sein.

Durch erfolgreiche Ausführung der Programminstruktionen 530 unter Verwendung des kryptographischen Protokolls 532 erfolgt eine Authentifizierung des Computersystems 500 gegenüber dem Hilfs-ID-Token 100. Hierbei kann nach Ausführungsformen auch eine Leseberechtigung zum Lesen von Daten 124 durch das Computersystem 500 nachgewiesen werden. Entsprechende Daten 124 sind beispielsweise in dem geschützten Speicherbereich 120 des Hilfs-ID-Tokens 100 gespeichert oder werden durch den Hilfs-ID-Token 100 über eine gesicherte Kommunikationsverbindung von den externen Geräten 200, 300, 400 bereitgestellt.

Eine Datenübertragung zwischen Hilfs-ID-Token 100 und den externen Geräten 200, 300, 400 kann ebenso wie die zwischen Hilfs-ID-Token 100 und Computersystem 500 mittels Ende-zu-Ende-Verschlüsselung gesichert sein. Für die Ende-zu-Ende-Verschlüsselung kann ein symmetrischer Schlüssel verwendet werden, der beispielsweise anlässlich der Ausführung des kryptographischen Protokolls zwischen dem Hilfs-ID-Token 100 und den Geräten 200, 300, 400 bzw. dem Computersystem 500 vereinbart wird. Prinzipiell kann jedes an sich vorbekannte Verfahren zur Vereinbarung des symmetrischen Schlüssels für die Ende-zu-Ende-Verschlüsselung verwendet werden, wie zum Beispiel ein Diffie-Hellman-Schlüsselaustausch. Für die Schlüsselverteilung kann beispielsweise ein asymmetrisches Verschlüsselungsverfahren verwendet werden. Unter Verwendung einer hybriden Verschlüsselung wählt beispielsweise entweder der Hilfs-ID-Token 100 oder eines der externen Geräten 200, 300, 400, bzw. das Computersystem 500 einen zufälligen symmetrischen Schlüssel zum symmetrischen Verschlüsseln vom zu schützenden Daten aus, welche über eine Ende-zu-Ende-verschlüsselte Verbindung übertagen werden sollen. Zur sicheren Übertragung an die andere Partei wird der symmetrische Schlüssel mit einem öffentlichen Schlüssel des Empfängers verschlüsselt, sodass dieser den symmetrischen Schlüssel mit einem dem öffentlichen Schlüssel zugeordneten privaten Schlüssel nach Empfang entschlüsseln kann.

Bei dem Computersystem 500 kann es sich beispielsweise um ein Dienst-Computersystem handeln. Je nach der Art des beauftragten oder bestellten Produkts, der Dienstleistung oder nachgefragten Funktionalität verlangt das Computersystem 500 ein oder mehrere Attribute des Nutzers 102 und/oder dessen Hilfs-ID-Token 100 anhand eines oder mehrerer vorgegebener Kriterien zu überprüfen. Nur wenn diese Prüfung bestanden wird, wird eine Anfrage des Nutzers 102 entgegengenommen und/oder ausgeführt.

Das Computersystem 500 umfasst beispielsweise eine Schnittstelle 508 zur Kommunikation mit dem Hilfs-ID-Tokens 100 über das Netzwerk 502. Das Computersystem 500 umfasst ferner einen Speicher 518, in dem in einem geschützten Speicherbereich 520 ein privater Schlüssel 522 gespeichert ist. Zudem sind in dem Speicher 518 ein dem privaten Schlüssel 522 zugeordnetes Zertifikat 526 sowie ein Programm 521 gespeichert ist. Durch Ausführen des Programms 521 wird eine Funktionalität des Computersystem 500 bereitgestellt bzw. gesteuert, zu deren Ausführung die Authentifizierung des Nutzers 102 durch den Hilfs-ID-Token 100 notwendig ist. Auch bei diesem Zertifikaten 526 kann es sich beispielsweise um ein Zertifikate nach einem PKI-Standard, wie zum Beispiel X.509 handeln.

Darüber hinaus umfasst das Computersystem 500 zumindest einen Prozessor 528 zur Ausführung von Programminstruktionen 530. Durch Ausführung der Programminstruktionen 530 erfolgt die Authentifizierung des Computersystems 500 gegenüber dem Hilfs-ID-Token 100 unter Verwendung des kryptographischen Protokolls 532.

Beispielsweise kann es für eine Sicherheitskontrolle am Flughafen erforderlich sein, dass der Nutzer 102 seine Identität gegenüber dem Computersystem 500 offenbart, welches den Zutritt zum Gate kontrolliert, und dass diese Identität überprüft wird. Im Stand der Technik muss der Nutzer 102 hierzu beispielsweise seinen Personalausweis vorlegen. Dieser Vorgang wird durch das Bereitstellen der digitalen Identität des Nutzers 102 mittels des Hilfs-ID-Tokens 100 ersetzt. Nach erfolgreicher Authentifizierung des Nutzers 102 erstellt der Hilfs-ID-Tokens 100 einen Authentifizierungstoken, welcher die erfolgreiche Authentifizierung des Nutzers 102 durch den Hilfs-ID-Tokens 100 bestätigt und dessen Identität, z.B. Namen, angibt.

Je nach Anwendungsfall muss der Nutzer 102 aber nicht seine Identität gegenüber dem Computersystem 500 offenbaren, sondern es reicht die Mitteilung beispielsweise eines einzelnen Attributs aus. Beispielsweise kann der Nutzer 102 über eines der Attribute einen Nachweis erbringen, dass er zu einer bestimmten Personengruppe gehört, die zugriffsberechtigt für eine von dem Computersystem 500 bereitgestellte Funktionalität ist. Beispielsweise kann ein solches Kriterium die Zugehörigkeit des Nutzers 102 zu einem Personenkreis sein, der zugangsberechtigt zu einem gesicherten Bereich ist, zu welchem der Zutritt durch das Computersystem 500 kontrolliert wird.

Zur Inanspruchnahme eines von dem Computersystem 500 zur Verfügung gestellten Dienstes oder zur Freigabe eines von dem Computersystem 500 kontrollierten Zutritts wird beispielsweise wie folgt vorgegangen:

### 1. Authentifizierung des Nutzers 102 durch den Hilfs-ID-Token 100.

Der Nutzer 102 wird durch den Hilfs-ID-Token 100 halb-oder vollautomatisch authentifiziert. Hierzu werden die in Signalreichweite des Hilfs-ID-Tokens 100 befindlichen Geräte 200, 300, 400 erfasst und authentifiziert. Das resultierende Authentifizierungsprofil wird mit dem vorgegebenen Geräteprofil 121, welches dem Nutzer 102 zugeordnet und für diesen charakteristisch ist, verglichen. Durch Ausführung der Programminstruktionen 130 prüft dann der Hilfs-ID-Token 100 die Übereinstimmung des Authentifizierungsprofils mit dem Geräteprofil 121. Wenn das Authentifizierungsprofils hinreichend mit dem Geräteprofil 121 übereinstimmt, so gilt der Nutzer 102 als authentifiziert.

### 2. Authentifizierung des Computersystems 500 gegenüber dem Hilfs-ID-Token 100.

Hierzu wird eine Verbindung zwischen dem Hilfs-ID-Token 100 und dem Computersystem 500 beispielsweise über das Netzwerk 502 hergestellt. Beispielsweise überträgt das Computersystem 500 sein Zertifikat 526 über diese Verbindung an den Hilfs-ID-Token 100. Durch Ausführen des kryptographische Protokolls 132 wird dann eine so genannte Challenge generiert, d.h. beispielsweise eine Zufallszahl. Diese Zufallszahl wird mit dem in dem Zertifikat 526 beinhalteten öffentlichen Schlüssel des Computersystems 500 verschlüsselt. Das resultierende Chiffrat wird von dem Hilfs-ID-Token 100 über die Verbindung an das Computersystem 500 gesendet. Durch Ausführen des kryptographische Protokolls 532 entschlüsselt das Computersystem 500 das Chiffrat mit Hilfe seines dem öffentlichen Schlüssel des Zertifikats 526 zugeordneten privaten Schlüssels 522 und erhält so die Zufallszahl. Die Zufallszahl sendet das Computersystem 500 über die Verbindung an den Hilfs-ID-Token 100 zurück. Durch Ausführung des Protokolls 132 wird dort geprüft, ob die von dem Computersystem 500 empfangene Zufallszahl mit der ursprünglich generierten Zufallszahl, d.h. der Challenge, übereinstimmt. Ist dies der Fall, so gilt das Computersystem 500 als gegenüber dem Hilfs-ID-Token 100 authentifiziert. Die Zufallszahl kann als symmetrischer Schlüssel für eine Ende-zu-Ende-Verschlüsselung verwendet werden. In analoger Weise kann in dem vorhergehenden Schritt 1 auch die Authentifizierung der Geräte 200, 300, 400 durch den Hilfs-ID-Token 100 erfolgen. Nach Ausführungsformen umfasst das Verfahren zudem eine Authentifizierung des Hilfs-ID-Tokens 100 durch das Computersystem 500, beispielsweise unter Verwendung des Zertifikats 126 und des zugeordneten privaten Schlüssels 122.

### 3. Erzeugen und Senden eines Authentifizierungstokens durch den Hilfs-ID-Token 100.

Nachdem der Nutzer 102 erfolgreich durch den Hilfs-ID-Token 100 authentifiziert wurde und nachdem sich das Computersystem 500 erfolgreich gegenüber dem Hilfs-ID-Token 100 authentifiziert hat, erzeugt der Hilfs-ID-Token 100 einen Authentifizierungstoken zur Bestätigung der erfolgreichen Authentifizierung und sendet diesen an das Computersystem 500. Der Authentifizierungstoken enthält beispielsweise ein oder mehrere Attribute des authentifizierten Nutzers. Diese Attribute werden von dem Hilfs-ID-Token 100 mit Hilfe seines Schlüssels 122 signiert und über das Netzwerk 502 an das Computersystem 500 übertragen. Dadurch wird das Computersystem 500 über die aus dem Hilfs-ID-Token 100 ausgelesenen Attribute in Kenntnis gesetzt, sodass das Computersystem 500 diese Attribute anhand der vorgegebenen ein oder mehreren Kriterien prüfen kann, um danach ggf. den von dem Nutzer 102 angeforderten Dienst zu erbringen.

Durch die Authentifizierung des Nutzers 102 durch den Hilfs-ID-Token 100 und die gegenseitige Authentifizierung zwischen Computersystems 500 und Hilfs-ID-Token 100 wird der notwendige Vertrauensanker geschaffen, sodass das Computersystem 500 sicher sein kann, dass der Träger des Hilfs-ID-Tokens 100 der authentifizierte Nutzers 102 ist. Zudem kann es zusätzliche Daten 124 bzw. Attribute des Nutzer 102 erhalten, deren Authentizität von dem Hilfs-ID-Token 100 bezeugt wird.

Je nach Ausführungsform kann die Reihenfolge der Authentifizierung unterschiedlich sein. Beispielsweise kann vorgesehen sein, dass zunächst der Nutzer 102 durch den Hilfs-ID-Token 100 authentifiziert werden muss und nachfolgend das Computersystem 500. Es ist aber grundsätzlich auch möglich, dass zunächst das Computersystem 500 durch den Hilfs-ID-Token 100 authentifiziert wird und erst nachfolgend der Nutzer 102.

Nach Ausführungsformen erfolgt die Authentifizierung des Nutzers 102 durch den Hilfs-ID-Token 100 fortwährend oder in diskreten Intervallen, so dass durch den Hilfs-ID-Token 100 ständig überprüft wird, ob der tragbare Hilfs-ID-Token 100 auch tatsächlich von dem Nutzer 102 mitgeführt bzw. von diesem aktuell gehandhabt wird. Eine Authentifizierung des Computersystems 500 sowie eine Erstellung eines Authentifizierungstokens erfolgt in diesem Fall nur auf eine Anfrage des Computersystems 500 hin.

Ferner kann durch das Computersystems 500 kontinuierlich oder fortwährend in diskreten Intervallen die Gegenwart des Hilfs-ID-Tokens 100 überwacht werden. Wird der Hilfs-ID-Tokens 100 beispielsweise aus der Signalreichweite der Kommunikationsverbindung zwischen Computersystem 500 und Hilfs-ID-Tokens 100 hinausbewegt, sodass die Verbindung abbricht, so kann das Computersystems 500 dadurch die Abwesenheit des Nutzer 102 erfassen und entsprechend darauf reagieren. Beispielsweise kann Computersystems 500 im Falle eines Personalcomputers, an dem der Nutzer 102 gearbeitet hat, dessen Bildschirm sperren, wenn der Nutzer 102 den Raum verlässt.

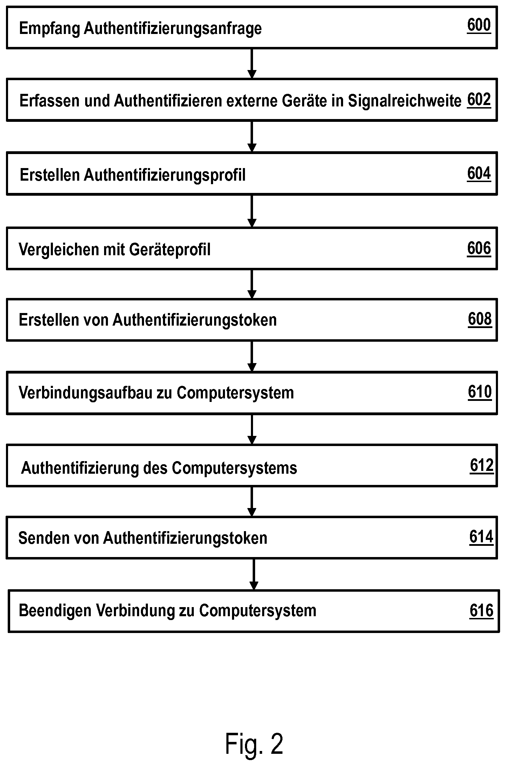

Die Figur 2 zeigt eine Ausführungsform eines exemplarischen Verfahrens. In dem Schritt 600 empfängt der Hilfs-ID-Token eine Authentifizierungsanfrage von einem Computersystem. Beispielsweise handelt es sich bei dem Computersystem um ein einen Computer des Nutzers oder um ein Computersystem, welches eine Schließanlage steuert. Startet der Nutzer nun seinen Computer oder betätigt er einen Türöffner der durch die Schließanlage gesicherten Tür, so wird die Authentifizierungsanfrage erzeugt und gesendet.

In dem Schritt 602 erfasst der Hilfs-ID-Token externe Geräte, welche sich in Signalreichweite des Hilfs-ID-Tokens angeordnet sind. Die einzelnen erfassten Geräte werden zudem durch den Hilfs-ID-Token authentifiziert.

In Schritt 604 wird aus den authentifizierten Geräten ein Authentifizierungsprofil des Nutzers erstellt. In dem Schritt 606 wird das Authentifizierungsprofil mit einem Geräteprofil verglichen. Bei hinreichender Übereinstimmung zwischen den beiden Profilen wird in dem Schritt 608 ein Authentifizierungstoken. Das Authentifizierungstoken umfasst beispielsweise ein Attribut, durch das eine Berechtigung des Nutzers nachgewiesen wird. Zum Beispiel der Name des Nutzers oder ein Beleg der Zugehörigkeit des Nutzers zu einer bestimmten Gruppe. Ferner bestätigt das Authentifizierungstoken die erfolgreiche Authentifizierung des Nutzers. Auf den Empfang des Authentifizierungstokens hin, wird beispielsweise die Nutzung des Computers für den authentifizierten Nutzer freigegeben oder die Tür entriegelt.

In dem Schritt 610 wird eine Verbindung zwischen dem Hilfs-ID-Token und dem Computersystem aufgebaut. Hierbei handelt es sich vorzugsweise um eine gesicherte Verbindung, beispielsweise nach einem so genannten Secure Messaging-Verfahren.

In dem Schritt 612 erfolgt zumindest eine Authentifizierung des Computersystems gegenüber dem Hilfs-ID-Token über die in dem Schritt 610 aufgebaute Verbindung. Zusätzlich kann eine Authentifizierung auch des Hilfs-ID-Tokens gegenüber dem Computersystem vorgesehen sein.

Nachdem sowohl der Nutzer als auch das Computersystem erfolgreich durch den Hilfs-ID-Token authentifiziert worden sind, wird das Authentifizierungstoken in dem Schritt 614 an das Computersystem gesendet. Das Authentifizierungstoken wird beispielsweise mittels Ende-zu-Ende-Verschlüsselung über die gesicherte Verbindung an das Computersystem übertragen und dort entschlüsselt.

Beispielsweise überprüft das Sicherheitsmodul des Hilfs-ID-Tokens die Integrität des Hilfs-ID-Tokens vor der Ausführung des Schritts 610. Eine solche Integritätsprüfung kann wiederholend in gleichmäßigen oder ungleichmäßigen Abständen ausgeführt werden. Alternativ oder zusätzlich kann die Integritätsprüfung durch ein Ereignis ausgelöst werden, beispielsweise den Empfang der Authentifizierungsanfrage.

In dem Schritt 616 wird die Verbindung zwischen dem Hilfs-ID-Token und dem Computersystem schließlich wieder beendet.

Mögliche vorteilhafte Ausführungsformen umfassen die folgenden Merkmalskombinationen:
1. Verfahren für eine zumindest halbautomatisierte Multi-Faktor-Authentifizierung eines Nutzers mittels eines dem Nutzer zugordneten tragbaren Hilfs-ID-Tokens, wobei der Hilfs-ID-Token zumindest eine Kommunikationsschnittstelle zur drahtlosen Kommunikation umfasst, welche dazu konfiguriert ist, die Gegenwart externer elektronischer Geräte innerhalb einer vordefinierten Signalreichweite der Kommunikationsschnittstelle zu erfassen,
   wobei das Verfahren umfasst:
   - Empfangen einer Mehrzahl von Kommunikationssignalen von einer Gruppe von externen Geräten,
   - Authentifizieren der einzelnen Geräte der Gruppe,
   - Erstellen eines Authentifizierungsprofils der authentifizierten Gruppe von Geräten,
   - Vergleichen des Authentifizierungsprofils mit einem vorgegebenen Geräteprofil, welches eine dem Nutzer zugeordnete Gruppe von Geräten identifiziert,
   - im Falle einer hinreichenden Übereinstimmung mit dem Geräteprofil, Bestätigung der erfolgreichen Authentifizierung des Nutzers.
2. Verfahren nach Punkt 1, wobei das Verfahren kontinuierlich ausgeführt und die Authentifizierung des Nutzers kontinuierlich überprüft wird.
3. Verfahren nach einem der vorhergehenden Punkte, wobei das vorgegebene Geräteprofil zumindest ein tragbares externes Gerät umfasst, welches ausschließlich dem Nutzer zugeordnet ist, und wobei es eine notwendige Bedingung für eine hinreichende Übereinstimmung ist, dass das Authentifizierungsprofil das ausschließlich dem Nutzer zugeordnete Gerät umfasst.
4. Verfahren nach einem der vorhergehenden Punkte, wobei das vorgegebene Geräteprofil zumindest ein ortsfest installiertes Gerät umfasst und wobei es eine notwendige Bedingung für eine hinreichende Übereinstimmung ist, dass das Authentifizierungsprofil das ortsfest installierte Gerät umfasst.
5. Verfahren nach einem der vorhergehenden Punkte, wobei das vorgegebene Geräteprofil zumindest ein Gerät umfasst, welches einer Gruppe von Nutzern zugeordnet ist, welche den dem Hilfs-ID-Token zugeordneten Nutzer umfasst, und wobei es eine notwendige Bedingung für eine hinreichende Übereinstimmung ist, dass das Authentifizierungsprofil das der Gruppe von Nutzern zugeordnete Gerät umfasst.
6. Verfahren nach einem der vorhergehenden Punkte, wobei das vorgegebene Geräteprofil zumindest ein Gerät umfasst, welches ausschließlich einem anderen Nutzer zugeordnet ist, und wobei es eine notwendige Bedingung für eine hinreichende Übereinstimmung ist, dass das Authentifizierungsprofil das ausschließlich dem anderen Nutzer zugeordnete Gerät umfasst.
7. Verfahren nach einem der vorhergehenden Punkte, wobei die authentifizierten Geräte des Authentifizierungsprofils beim Vergleichen mit dem vorgegebenen Geräteprofil unterschiedlich gewichtet werden.
8. Verfahren nach einem der vorhergehenden Punkte, wobei die erfolgreiche Authentifizierung eines oder mehrerer Geräte des Geräteprofils fakultativ für die erfolgreiche Authentifizierung des Nutzers ist.
9. Verfahren nach einem der vorhergehenden Punkte, wobei das vorgegebene Geräteprofil zeit- und/oder ortsabhängig ist.
10. Verfahren nach einem der vorhergehenden Punkte, wobei das Authentifizierungsprofil zeitlich fortgesetzt erstellt und die zeitliche Entwicklung des erfassten Authentifizierungsprofils beim Vergleich mit dem Geräteprofil berücksichtigt wird.
11. Verfahren nach einem der vorhergehenden Punkte, wobei das vorgegebene Geräteprofil dynamisch erstellt wird unter Verwendung eines von einer Anwendung des Hilfs-ID-Tokens bereitgestellten Profilerwartungsparameters.
12. Verfahren nach einem der vorhergehenden Punkte, wobei das vorgegebene Geräteprofil dynamisch erstellt wird unter Verwendung eines dem Hilfs-ID-Token von einer Anwendung eines der authentifizierten Geräte bereitgestellten Profilerwartungsparameters.
13. Verfahren nach einem der vorhergehenden Punkte, wobei von einem oder mehreren der authentifizierten Geräte automatisch erfasste Sensordaten übermittelt und mit Referenzwerten verglichen werden, welche das vorgegebene Geräteprofil für die Sensordaten umfasst und die charakteristisch für den zu authentifizierenden Nutzer sind.
14. Verfahren nach einem der vorhergehenden Punkte, wobei das Geräteprofil ein Negativkriterium umfasst, bei dessen Erfüllung die Anforderungen an das Authentifizierungsprofil für eine hinreichende Übereinstimmung mit dem Geräteprofil erhöht werden.
15. Verfahren nach einem der vorhergehenden Punkte, wobei das Geräteprofil ein Ausschlusskriterium umfasst, bei dessen Erfüllung eine Authentifizierung des Nutzers gesperrt wird.
16. Verfahren nach einem der vorhergehenden Punkte, wobei das vorgegebene Geräteprofil von einem externen Computersystem bereitgestellt wird und der Vergleich umfasst:
   - Senden des Authentifizierungsprofils an das externe Computersystem,
   - in Antwort auf das Authentifizierungsprofil, empfangen des Vergleichsergebnisses.
17. Verfahren nach einem der Punkte 1 bis 15, wobei der Hilfs-ID-Token das vorgegebene Geräteprofil umfasst, welches in einem geschützten Speicherbereich eines nichtflüchtigen Speichers des Hilfs-ID-Tokens gespeichert ist.
18. Verfahren nach einem der vorhergehenden Punkte, wobei für den Hilfs-ID-Token mehrere Geräteprofile bereitgestellt sind, welche jeweils einem anderen Nutzer zugeordnet sind, und das Authentifizierungsprofil mit jedem der Geräteprofile verglichen wird.
19. Verfahren nach einem der vorhergehenden Punkte, wobei die Nutzerauthentifizierung auf den Empfang einer Authentifizierungsanfrage von einem Computersystem zur Authentifizierung des Nutzers durch den Hilfs-ID-Token sowie einer erfolgreichen Authentifizierung des anfragenden Computersystems hin ausgeführt und ein Authentifizierungstoken an das Computersystem übermittelt wird.
20. Verfahren nach Punkt 19, wobei die Authentifizierung des Computersystems durch den Hilfs-ID-Token umfasst:
   Empfang und Validierung eines Zertifikats des Computersystems.
21. Verfahren nach Punkt 20, wobei das Zertifikat des Computersystems eine Angabe derjenigen Daten beinhaltet, für welche das Computersystem zu dem Lesezugriff berechtigt ist, wobei das Verfahren ferner umfasst:
   Prüfung der Berechtigung des Computersystems für den Lesezugriff auf die Daten unter Verwendung des Zertifikats.
22. Verfahren nach einem der Punkte 19 bis 21, wobei das Verfahren auf den Empfang der Authentifizierungsanfrage und der Authentifizierung des Computersystems hin vollautomatisch ausgeführt wird.
23. Verfahren nach einem der Punkte 19 bis 22, wobei das Verfahren auf eine erfolgreiche Authentifizierung des Nutzers hin ferner umfasst:
   Freigabe eines Lesezugriffs des Computersystems auf dem Nutzer zugeordnete Daten, auf welche der Hilfs-ID-Token Zugriff besitzt.
24. Verfahren nach einem der Punkte 23, wobei es sich bei den Daten um eine Angabe des Aufenthaltsorts des Hilfs-ID-Tokens handelt.
25. Computerprogrammprodukt, insbesondere ein computerlesbares, nichtflüchtiges Speichermedium, mit ausführbaren Programminstruktionen zur Ausführung eines Verfahrens nach einem der Punkte 1 bis 24.
26. Hilfs-ID-Token, welcher dazu konfiguriert ist, ein Verfahren nach einem der Punkte 1 bis 24 auszuführen.
27. System, welches einen Hilfs-ID-Token nach Punkt 26 sowie eine Gruppe von externen Gräten umfasst, welche zur Ausführung eines Verfahrens nach einem der Punkte 1 bis 24 durch den Hilfs-ID-Token konfiguriert und registriert sind.
28. System, welches einen Hilfs-ID-Token nach Punkt 26 sowie ein Computersystem umfasst und zum Ausführen eines Verfahrens nach einem der Punkte 19 bis 24 konfiguriert ist.

### Bezugszeichenliste

- 100: Hilfs-ID-Token
- 102: Nutzer
- 108: Schnittstelle
- 118: Speicher
- 120: Geschützter Speicherbereich
- 121: Geräteprofil
- 122: Privater Schlüssel
- 124: Daten
- 126: Zertifikat
- 128: Prozessor
- 130: Kryptographisches Protokoll
- 132: Instruktionen für Nutzerauthentifizierung
- 200: Elektronisches Gerät
- 208: Schnittstelle
- 210: Sensor
- 218: Speicher
- 220: Geschützter Speicherbereich
- 222: Privater Schlüssel
- 226: Zertifikat
- 228: Prozessor
- 230: Instruktionen für Geräteauthentifizierung
- 232: Kryptographisches Protokoll
- 300: Elektronisches Gerät
- 308: Schnittstelle
- 310: Sensor
- 318: Speicher
- 320: Geschützter Speicherbereich
- 322: Privater Schlüssel
- 326: Zertifikat
- 328: Prozessor
- 330: Instruktionen für Geräteauthentifizierung
- 332: Kryptographisches Protokoll
- 400: Elektronisches Gerät
- 408: Schnittstelle
- 418: Speicher
- 420: Geschützter Speicherbereich
- 422: Privater Schlüssel
- 426: Zertifikat
- 428: Prozessor
- 430: Instruktionen für Geräteauthentifizierung
- 432: Kryptographisches Protokoll
- 500: Computersystem
- 502: Netzwerk
- 508: Schnittstelle
- 518: Speicher
- 520: Geschützter Speicherbereich
- 521: Programminstruktionen
- 522: Privater Schlüssel
- 526: Zertifikat
- 528: Prozessor
- 530: Instruktionen für Geräteauthentifizierung
- 532: Kryptographisches Protokoll

## Patentansprüche

1. Verfahren für eine zumindest halbautomatisierte Multi-Faktor-Authentifizierung eines Nutzers (102) mittels eines dem Nutzer (102) zugordneten tragbaren Hilfs-ID-Tokens (100), wobei der Hilfs-ID-Token (100) zumindest eine Kommunikationsschnittstelle (108) zur drahtlosen Kommunikation umfasst, welche dazu konfiguriert ist, die Gegenwart externer elektronischer Geräte (200, 300, 400) innerhalb einer vordefinierten Signalreichweite der Kommunikationsschnittstelle (108) zu erfassen,
wobei das Verfahren umfasst:
• Empfangen einer Mehrzahl von Kommunikationssignalen von einer Gruppe einer Mehrzahl von in Signalreichweite der Kommunikationsschnittstelle (108) angeordneten externen Geräten (200, 300, 400) durch die Kommunikationsschnittstelle (108),
• Authentifizieren der einzelnen Geräte (200, 300, 400) der Gruppe,
• Erstellen eines Authentifizierungsprofils der authentifizierten Gruppe von Geräten (200, 300, 400),
• Vergleichen des Authentifizierungsprofils mit einem vorgegebenen Geräteprofil (121), welches eine dem Nutzer (102) zugeordnete Gruppe von Geräten (200, 300, 400) identifiziert,
• im Falle einer hinreichenden Übereinstimmung mit dem Geräteprofil (121), Bestätigung der erfolgreichen Authentifizierung des Nutzers (102) auf Basis der Anwesenheit der Mehrzahl externer elektronischer Geräte.

2. Verfahren nach Anspruch 1, wobei das Verfahren kontinuierlich ausgeführt und die Authentifizierung des Nutzers (102) kontinuierlich überprüft wird.

3. Verfahren nach einem der vorhergehenden Ansprüche, wobei das vorgegebene Geräteprofil (121) zumindest ein tragbares externes Gerät (200, 300, 400) umfasst, welches ausschließlich dem Nutzer (102) zugeordnet ist, und wobei es eine notwendige Bedingung für eine hinreichende Übereinstimmung ist, dass das Authentifizierungsprofil das ausschließlich dem Nutzer (102) zugeordnete Gerät (200, 300, 400) umfasst, und/oder
wobei das vorgegebene Geräteprofil (121) zumindest ein ortsfest installiertes Gerät (200, 300, 400) umfasst und wobei es eine notwendige Bedingung für eine hinreichende Übereinstimmung ist, dass das Authentifizierungsprofil das ortsfest installierte Gerät (200, 300, 400) umfasst, und/oder
wobei das vorgegebene Geräteprofil (121) zumindest ein Gerät (200, 300, 400) umfasst, welches einer Gruppe von Nutzern (102) zugeordnet ist, welche den dem Hilfs-ID-Token (100) zugeordneten Nutzer (102) umfasst, und wobei es eine notwendige Bedingung für eine hinreichende Übereinstimmung ist, dass das Authentifizierungsprofil das der Gruppe von Nutzern (102) zugeordnete Gerät (200, 300, 400) umfasst, und/oder
wobei das vorgegebene Geräteprofil (121) zumindest ein Gerät (200, 300, 400) umfasst, welches ausschließlich einem anderen Nutzer (102) zugeordnet ist, und wobei es eine notwendige Bedingung für eine hinreichende Übereinstimmung ist, dass das Authentifizierungsprofil das ausschließlich dem anderen Nutzer (102) zugeordnete Gerät (200, 300, 400) umfasst.

4. Verfahren nach einem der vorhergehenden Ansprüche, wobei das vorgegebene Geräteprofil (121) zeit- und/oder ortsabhängig ist und/oder
wobei das Authentifizierungsprofil zeitlich fortgesetzt erstellt und die zeitliche Entwicklung des erfassten Authentifizierungsprofils beim Vergleich mit dem Geräteprofil (121) berücksichtigt wird.

5. Verfahren nach einem der vorhergehenden Ansprüche, wobei das vorgegebene Geräteprofil (121) dynamisch erstellt wird unter Verwendung eines von einer Anwendung des Hilfs-ID-Tokens (100) bereitgestellten Profilerwartungsparameters.

6. Verfahren nach einem der vorhergehenden Ansprüche, wobei das vorgegebene Geräteprofil (121) dynamisch erstellt wird unter Verwendung eines dem Hilfs-ID-Token (100) von einer Anwendung eines der authentifizierten Geräte (200, 300, 400) bereitgestellten Profilerwartungsparameters.

7. Verfahren nach einem der vorhergehenden Ansprüche, wobei von einem oder mehreren der authentifizierten Geräte (200, 300, 400) automatisch erfasste Sensordaten übermittelt und mit Referenzwerten verglichen werden, welche das vorgegebene Geräteprofil (121) für die Sensordaten umfasst und die charakteristisch für den zu authentifizierenden Nutzer (102) sind, und/oder wobei das Geräteprofil (121) ein Negativkriterium umfasst, bei dessen Erfüllung die Anforderungen an das Authentifizierungsprofil für eine hinreichende Übereinstimmung mit dem Geräteprofil (121) erhöht werden, und/oder
wobei das Geräteprofil (121) ein Ausschlusskriterium umfasst, bei dessen Erfüllung eine Authentifizierung des Nutzers (102) gesperrt wird.

8. Verfahren nach einem der vorhergehenden Ansprüche, wobei das vorgegebene Geräteprofil (121) von einem externen Computersystem bereitgestellt wird und der Vergleich umfasst:
• Senden des Authentifizierungsprofils an das externe Computersystem,
• in Antwort auf das Authentifizierungsprofil, empfangen des Vergleichsergebnisses.

9. Verfahren nach einem der Ansprüche 1 bis 7, wobei der Hilfs-ID-Token (100) das vorgegebene Geräteprofil (121) umfasst, welches in einem geschützten Speicherbereich (120) eines nichtflüchtigen Speichers (118) des Hilfs-ID-Tokens (100) gespeichert ist.

10. Verfahren nach einem der vorhergehenden Ansprüche, wobei für den Hilfs-ID-Token (100) mehrere Geräteprofile (121) bereitgestellt sind, welche jeweils einem anderen Nutzer (102) zugeordnet sind, und das Authentifizierungsprofil mit jedem der Geräteprofile (121) verglichen wird.

11. Verfahren nach einem der vorhergehenden Ansprüche, wobei die Nutzerauthentifizierung auf den Empfang einer Authentifizierungsanfrage von einem Computersystem (500) zur Authentifizierung des Nutzers (102) durch den Hilfs-ID-Token (100) sowie einer erfolgreichen Authentifizierung des anfragenden Computersystems (500) hin ausgeführt und ein Authentifizierungstoken an das Computersystem (500) übermittelt wird.

12. Verfahren nach Anspruch 11, wobei die Authentifizierung des Computersystems (500) durch den Hilfs-ID-Token (100) umfasst:
Empfang und Validierung eines Zertifikats (526) des Computersystems (500), und/oder wobei das Verfahren auf den Empfang der Authentifizierungsanfrage und der Authentifizierung des Computersystems (500) hin vollautomatisch ausgeführt wird,
und/oder wobei das Verfahren auf eine erfolgreiche Authentifizierung des Nutzers (102) hin ferner umfasst:
Freigabe eines Lesezugriffs des Computersystems (500) auf dem Nutzer (102) zugeordnete Daten (124), auf welche der Hilfs-ID-Token (100) Zugriff besitzt.

13. Computerprogrammprodukt, insbesondere ein computerlesbares, nichtflüchtiges Speichermedium, mit ausführbaren Programminstruktionen zur Ausführung eines Verfahrens nach einem der Ansprüche 1 bis 12.

14. Hilfs-ID-Token (100), welcher dazu konfiguriert ist, ein Verfahren nach einem der Ansprüche 1 bis 12 auszuführen.

15. System, welches einen Hilfs-ID-Token (100) nach Anspruch 14 sowie eine Gruppe von externen Gräten umfasst, welche zur Ausführung eines Verfahrens nach einem der Ansprüche 1 bis 12 durch den Hilfs-ID-Token (100) konfiguriert und registriert sind.

16. System, welches einen Hilfs-ID-Token (100) nach Anspruch 14 sowie ein Computersystem (500) umfasst und zum Ausführen eines Verfahrens nach einem der Ansprüche 11 bis 12 konfiguriert ist.

## Claims

1. A method for at least semi-automated multi-factor authentication of a user (102) by means of a portable auxiliary ID token (100) associated with the user (102), wherein the auxiliary ID token (100) comprises at least one communications interface (108) for wireless communication, which is configured to detect the presence of external electronic devices (200, 300, 400) within a predefined signal range of the communications interface (108),
wherein the method comprises:
• receipt by the communications interface (108) of a plurality of communication signals from a group of a plurality of external devices (200, 300, 400) arranged within the signal range of the communications interface (108),
• authentication of the individual devices (200, 300, 400) in the group,
• creation of an authentication profile of the authenticated group of devices (200, 300, 400),
• comparison of the authentication profile with a predefined device profile (121) which identifies a group of devices (200, 300, 400) associated with the user (102),
• in the event of a sufficient match with the device profile (121), confirmation of the successful authentication of the user (102) on the basis of the presence of the plurality of external electronic devices.

2. The method according to claim 1, wherein the method is performed continuously and the authentication of the user (102) is checked continuously.

3. The method according to either one of the preceding claims, wherein the predefined device profile (121) comprises at least one portable external device (200, 300, 400) which is associated exclusively with the user (102), and wherein a necessary condition for a sufficient match is that the authentication profile comprises the device (200, 300, 400) associated exclusively with the user (102), and/or
wherein the predefined device profile (121) comprises at least one device (200, 300, 400) installed in a fixed manner, and wherein a necessary condition for a sufficient match is that the authentication profile comprises the device (200, 300, 400) installed in a fixed manner, and/or
wherein the predefined device profile (121) comprises at least one device (200, 300, 400) which is associated with a group of users (102) which includes the user (102) associated with the auxiliary ID token (100), and wherein a necessary condition for a sufficient match is that the authentication profile comprises the device (200, 300, 400) associated with the group of users (102), and/or
wherein the predefined device profile (121) comprises at least one device (200, 300, 400) which is associated exclusively with another user (102), and wherein a necessary condition for a sufficient match is that the authentication profile comprises the device (200, 300, 400) associated exclusively with the other user (102).

4. The method according to any one of the preceding claims, wherein the predefined device profile (121) is time-dependent and/or location-dependent and/or
wherein the authentication profile is created continuously over time and the development over time of the detected authentication profile is taken into consideration at the time of comparison with the device profile (121).

5. The method according to any one of the preceding claims, wherein the predefined device profile (121) is created dynamically with use of a profile expectation parameter provided from a use of the auxiliary ID token (100).

6. The method according to any one of the preceding claims, wherein the predefined device profile (121) is created dynamically with use of a profile expectation parameter provided to the auxiliary ID token (100) from a use of one of the authenticated devices (200, 300, 400).

7. The method according to any one of the preceding claims, wherein sensor data detected automatically by one or more of the authenticated devices (200, 300, 400) are transmitted and compared with reference values which comprise the predefined device profile (121) for the sensor data and are characteristic for the user (102) to be authenticated, and/or
wherein the device profile (121) comprises a negative criterion, and when this criterion is satisfied the requirements of the authentication profile for a sufficient match with the device profile (121) are increased, and/or
wherein the device profile (121) comprises an exclusion criterion, and when this criterion is satisfied an authentication of the user (102) is blocked.

8. The method according to any one of the preceding claims, wherein the predefined device profile (121) is provided from an external computer system and the comparison comprises:
• sending the authentication profile to the external computer system,
• in response to the authentication profile, receiving the comparison result.

9. The method according to any one of claims 1 to 7, wherein the auxiliary ID token (100) comprises the predefined device profile (121), which is stored in a protected memory area (120) of a non-volatile memory (118) of the auxiliary ID token (100).

10. The method according to any one of the preceding claims, wherein a plurality of device profiles (121) are provided for the auxiliary ID token (100) and are each associated with another user (102), and the authentication profile is compared with each of the device profiles (121).

11. The method according to any one of the preceding claims, wherein the user authentication is performed upon receipt of an authentication request from a computer system (500) for authentication of the user (102) by the auxiliary ID token (100) and a successful authentication of the requesting computer system (500), and an authentication token is transmitted to the computer system (500).

12. The method according to claim 11, wherein the authentication of the computer system (500) by the auxiliary ID token (100) comprises:
receipt and validation of a certificate (526) of the computer system (500), and/or wherein the method is performed fully automatically upon receipt of the authentication request and the authentication of the computer system (500), and/or wherein the method, upon successful authentication of the user (102), also comprises:
enablement of read access of the computer system (500) to data (124) which are associated with the user (102) and to which the auxiliary ID token (100) has access.

13. A computer program product, in particular a computer-readable, non-volatile storage medium, with executable program instructions for carrying out a method according to any one of claims 1 to 12.

14. An auxiliary ID token (100) which is configured to carry out a method according to any one of claims 1 to 12.

15. A system which comprises an auxiliary ID token (100) according to claim 14 and a group of external devices which are configured and registered to carry out a method according to any one of claims 1 to 12 by way of the auxiliary ID token (100).

16. A system which comprises an auxiliary ID token (100) according to claim 14 and a computer system (500) and which is configured to carry out a method according to any one of claims 11 to 12.

## Revendications

1. Procédé d'authentification multifactorielle au moins semi-automatisée d'un utilisateur (102) au moyen d'un jeton d'ID auxiliaire (100) portable attribué à l'utilisateur (102), où le jeton d'ID auxiliaire (100) comprend au moins une interface de communication (108) pour la communication sans fil, laquelle est configurée pour détecter la présence d'appareils (200, 300, 400) électroniques externes dans une portée de signal prédéfinie de l'interface de communication (108),
où le procédé comprend :
• la réception, par l'interface de communication (108), d'une multiplicité de signaux de communication d'un groupe d'une multiplicité d'appareils (200, 300, 400) externes disposés dans la portée de signal de l'interface de communication (108),
• l'authentification des appareils (200, 300, 400) individuels du groupe,
• la mise au point d'un profil d'authentification du groupe authentifié d'appareils (200, 300, 400),
• la comparaison du profil d'authentification avec un profil d'appareils (121) prédéfini, lequel identifie un groupe d'appareils (200, 300, 400) associé à l'utilisateur (102),
• dans le cas d'une concordance de manière adéquate avec le profil d'appareils (121), la confirmation de l'authentification réussie de l'utilisateur (102) sur la base de la présence de la multiplicité d'appareils électroniques externes.

2. Procédé selon la revendication 1, où le procédé est exécuté de manière continue et l'authentification de l'utilisateur (102) est vérifiée de manière continue.

3. Procédé selon l'une des revendications précédentes, dans lequel le profil d'appareils (121) prédéfini comprend au moins un appareil (200, 300, 400) externe portable, lequel est exclusivement associé à l'utilisateur (102), et où il est une condition nécessaire pour une concordance adéquate que le profil d'authentification comprenne l'appareil (200, 300, 400) associé exclusivement à l'utilisateur (102), et/ou
dans lequel le profil d'appareils (121) prédéfini comprend au moins un appareil (200, 300, 400) installé à un endroit fixe et dans lequel il est une condition nécessaire pour une concordance adéquate que le profil d'authentification comprenne l'appareil (200, 300, 400) installé à l'endroit fixe, et/ou
dans lequel le profil d'appareils (121) prédéfini comprend au moins un appareil (200, 300, 400), lequel est associé à un groupe d'utilisateurs (102), lequel comprend l'utilisateur (102) associé au jeton d'ID auxiliaire (100), et dans lequel il est une condition nécessaire pour une concordance adaptée que le profil d'authentification comprenne l'appareil (200, 300, 400) associé au groupe d'utilisateurs (102), et/ou
dans lequel le profil d'appareils (121) prédéfini comprend au moins un appareil (200, 300, 400), lequel est associé exclusivement à un autre utilisateur (102), et dans lequel il est une condition nécessaire pour une concordance adaptée que le profil d'authentification comprenne l'appareil (200, 300, 400) associé exclusivement à l'autre utilisateur (102).

4. Procédé selon l'une des revendications précédentes, dans lequel le profil d'appareils (212) prédéfini dépend de l'heure et/ou de l'endroit, et/ou
dans lequel le profil d'authentification est mis au point de manière continue au niveau horaire et il est tenu compte du développement en fonction de l'heure du profil d'authentification détecté lors de la comparaison avec le profil d'appareils (121).

5. Procédé selon l'une des revendications précédentes, dans lequel le profil d'appareils (121) prédéfini est mis au point de manière dynamique moyennant l'emploi d'un paramètre d'attente de profil fourni à partir d'une application du jeton d'ID auxiliaire (100).

6. Procédé selon l'une des revendications précédentes, dans lequel le profil d'appareils (121) prédéfini est mis au point de manière dynamique moyennant l'emploi d'un paramètre d'attente de profil fourni au jeton d'ID auxiliaire (100) à partir d'une application d'un des appareils (200, 300, 400) authentifiés.

7. Procédé selon l'une des revendications précédentes, dans lequel des données de capteur détectées par un ou plusieurs des appareils (200, 300, 400) authentifiés sont transmises et comparées avec des valeurs de référence, lesquelles sont comprises dans le profil d'appareils (121) prédéfini pour les données de capteur et qui sont caractéristiques pour l'utilisateur (102) à authentifier, et/ou
dans lequel le profil d'appareils (121) comprend un critère négatif, dont la réalisation permet d'augmenter les exigences au niveau du profil d'authentification pour une concordance adaptée avec le profil d'appareils (121), et/ou
dans lequel le profil d'appareils (121) comprend un critère d'exclusion, dont la réalisation empêche une authentification de l'utilisateur (102).

8. Procédé selon l'une des revendications précédentes, dans lequel le profil d'appareils (121) prédéfini est mis au point par un système informatique externe et la comparaison comprend :
• l'envoi du profil d'authentification au système informatique externe,
• en réponse au profil d'authentification, la réception du résultat de la comparaison.

9. Procédé selon l'une des revendications 1 à 7, dans lequel le jeton d'ID auxiliaire (100) comprend le profil d'appareils (121) prédéfini, lequel est stocké dans une zone de mémoire (120) sécurisée d'une mémoire (118) non volatile du jeton d'ID auxiliaire (100).

10. Procédé selon l'une des revendications précédentes, dans lequel plusieurs profils d'appareils (121) sont mis au point pour le jeton d'ID auxiliaire (100), lesquels sont respectivement associés à un autre utilisateur (102) et le profil d'authentification est comparé avec chacun des profils d'appareils (121).

11. Procédé selon l'une des revendications précédentes, dans lequel l'authentification de l'utilisateur est exécutée suite à la réception d'une demande d'authentification par un système informatique (100) pour l'authentification de l'utilisateur (102) par le jeton d'ID auxiliaire (100) ainsi qu'une authentification réussie du système informatique (500) demandeur et un jeton d'authentification est transmis au système informatique (500).

12. Procédé selon la revendication 11, dans lequel l'authentification du système informatique (500) par le jeton d'ID auxiliaire (100) comprend :
la réception et la validation d'un certificat (526) du système informatique (500), et/ou où le procédé est exécuté de manière totalement automatique suite à la réception de la demande d'authentification et de l'authentification du système informatique (500),
et/ou où le procédé comprend en outre, suite à une authentification réussie de l'utilisateur (102) :
la libération d'un accès en lecture du système informatique (500) pour des données (124) associées à l'utilisateur (102), pour lesquelles le jeton d'ID auxiliaire (100) possède un accès.

13. Produit-programme informatique, notamment support de stockage lisible par ordinateur, non volatil, doté d'instructions de programme exécutables pour l'exécution d'un procédé selon l'une des revendications 1 à 12.

14. Jeton d'ID auxiliaire (100), lequel est configuré pour exécuter un procédé selon l'une des revendications 1 à 12.

15. Système, lequel comprend un jeton d'ID auxiliaire (100) selon la revendication 14 ainsi qu'un groupe d'appareils externes, lesquels sont configurés et enregistrés pour l'exécution d'un procédé selon l'une des revendications 1 à 12 par le jeton d'ID auxiliaire (100).

16. Système, lequel comprend un jeton d'ID auxiliaire (100) selon la revendication 14 ainsi qu'un système informatique (500) et est configuré pour l'exécution d'un procédé selon l'une des revendications 11 à 12.
